# EUROPEAN PATENT APPLICATION

(11) **EP 4 814 545 A1**
(43) Date of publication of application: **30.09.2026**
(21) Application number: 24892496.1
(22) Date of filing: 17.10.2024
(51) Int. Cl.: G01V 3/12

(54) **DEVICE AND METHOD FOR DISCRIMINATING BURIED OBJECT**

(30) Priority: 24.11.2023 JP 2023198736
(71) Applicant: Hitachi, Ltd., Tokyo 100-8280 (JP)
(72) Inventor: KAWAHARA, Ryotaro, Tokyo 100-8280 (JP); ISOBE, Atsushi, Tokyo 100-8280 (JP); SHIZUMI, Soraya, Tokyo 100-8280 (JP)
(74) Representative: Mewburn Ellis LLP
(86) International application number: PCT/JP2024/037051
(87) International publication number: WO 2025/109921

(57) **Abstract**

Underground exploration data given from outside is input to a buried object discriminating device, which is designed to: estimate a permittivity of subsurface media based on the input underground exploration data; execute aperture synthesis processing on the underground exploration data based on the estimated permittivity; execute identification processing for identifying a buried object(s) based on aperture synthesis exploration data, which is obtained by the aperture synthesis processing executed on the underground exploration data, and the underground exploration data; and output information about the buried object(s), which is obtained by the identification processing, as buried object information.

## Description

### TECHNICAL FIELD

The present invention relates to a buried object discriminating device and method and is suited for application to, for example, a buried object discriminating device for discriminating an underground buried object(s) (hereinafter simply referred to as a "buried object(s)") by analyzing underground exploration data acquired by a ground radar device.

### BACKGROUND ART

Conventionally, the investigation of a buried object(s) in construction areas is carried out upon pole setting or undergrounding of utility poles. In this case, costs of investigation by trial excavation are extremely high and the investigation may damage the buried object(s) during the excavation. Therefore, the exploration of the buried object(s) using a ground radar device is conducted as a low-cost and non-destructive investigation method.

Electromagnetic waves emitted from the ground radar device normally propagate through the underground with a certain radiation angle. Therefore, reflected waves received by the ground radar device include not only the waves from the buried object(s) located directly below the ground radar device, but also those from the buried object(s) located nearby. Therefore, reflected images from the buried object(s) are recorded as distorted images in data acquired in the exploration of the buried object(s) with respect to a plurality of points on the ground surface.

In a manual investigation of the buried object(s), the buried object investigation has been performed by imaging the underground exploration data acquired by the ground radar device and interpreting characteristic images representing a signal from the buried object(s) by human eyes.

NPL 2 discloses a technique for estimating a burial depth level and electromagnetic wave velocity in media from the underground exploration data. This technique estimates values so that the values would fit a theoretical arrival time by changing the velocity of the electromagnetic waves in the media and the buried object depth level with respect to distinct reflected images in the underground exploration data. Moreover, NPL3 discloses a technique to correct errors caused by an angle of a lateral line across a buried tube.

NPL 1 discloses an aperture synthesis (synthetic aperture/migration) processing using data acquired at a plurality of points on the ground surface. The aperture synthesis processing technology is the technology to synthesize reflected signals from the same buried object with their reflection points based on parameters such as a positional relationship between a transmitting antenna and a receiving antenna of the ground radar device, sampling intervals upon the exploration, and underground relative permittivity. Consequently, the distortion of the aforementioned characteristic images can be corrected and aperture synthesis exploration data with an improved signal-to-noise ratio can be generated. The distortion correction is useful for the improvement of the accuracy in determining the position and size of the buried object(s).

NPL 4 discloses a technology to find the underground relative permittivity by applying the aforementioned aperture synthesis processing technology. An image corrected by the aperture synthesis processing is converged into a reflection point; however, if the parameters such as the relative permittivity used for the calculation includes an error, the distortion of the image remains. The result of the aperture synthesis processing is evaluated with a numerical value index according to the degree of this convergence and the relative permittivity when the evaluation reaches a maximum is searched, thereby appropriately obtaining an average relative permittivity around the image.

PTL 1 discloses a method for estimating the depths of a plurality of buried objects in nonuniform soil. In the nonuniform soil, the soil composition varies from place to place, and so does the relative permittivity. This technology performs migration processing, which is a kind of the aperture synthesis processing, on the underground exploration data in advance, while changing the relative permittivity within a certain range. Then, the coordinate values and the relative permittivity which maximize the migration result are recognized as an average relative permittivity at such coordinates and are extracted in advance. Also, the position of the buried object is detected by a buried object detector which performs learning in advance. The buried object detector performs learning by applying a machine learning method used for the image recognition. The aforementioned migration result is referenced with respect to nearby coordinates surrounding the detected buried object and the relevant relative permittivity is found. Then, PTL1 is characterized in that the depth of the buried object is estimated from the coordinates of the buried object and the relative permittivity.

Moreover, PTL 2 discloses a technology to automatically identify a buried object by using a buried object learning model based on underground exploration images obtained by a ground radar device. The buried object learning model is an AI (Artificial Intelligence) model configured by a neural network which has learned the underground exploration data of the object to be detected. This technology is characterized particularly in that an underground exploration image is generated from underground exploration data given from outside and aperture synthesis exploration data, to which the aperture synthesis processing has been applied, and the buried object is identified based on the generated underground exploration image.

### CITATION LIST

### PATENT LITERATURE

PTL 1: WO 2022/264342
PTL 2: Japanese Patent Application Laid-Open (Kokai) Publication No. 2022-1203327

### NON-PATENT LITERATURE

NPL 1: Matsuo Sekine, "Radar Signal Processing Technology," 1st edition, The Institute of Electronics, Information and Communication Engineers, September 20, 1991
NPL 2: Motoyuki Sato, "Physical Exploration Seminar 'Underground Radar,'" [online], July 2001, Center for Northeast Asian Studies, Tohoku University, [searched on June 13, 2023], the Internet <URL: http://cobalt.cneas.tohoku.ac.jp/users/sato/subsurface measurement by underground radar (2001) revised.pdf>
NPL 3: W. W. L. Lai, J. F. C. Sham and F. Xie, "Correction of GPR wave velocity with distorted hyperbolic reflection in underground utility's GPR investigation," 2016 16th International Conference on Ground Penetrating Radar (GPR), Hong Kong, China, 2016, pp. 1-4.
NPL 4: X. Wei and Y. Zhang, "Autofocusing Techniques for GPR Data from RC Bridge Decks," in IEEE Journal of Selected Topics in Applied Earth Observations and Remote Sensing, vol. 7, no. 12, pp. 4860-4868, Dec. 2014

### SUMMARY OF THE INVENTION

### PROBLEMS TO BE SOLVED BY THE INVENTION

The invention disclosed in PTL 2 can implement the identification of the buried object with high accuracy by inputting aperture synthesis processing data in addition to the underground exploration data, generating an integrated image, and then inputting the integrated image into an identification machine. This is because the high-quality aperture processing data based on appropriate parameters can be expected to correct the distortions of the reflected image with respect to the underground exploration data and to improve the signal-to-noise ratio. On the other hand, the aperture synthesis processing data is generated outside the system and is not combined with a buried object identification unit, so there is a possibility that the external aperture synthesis processing data which do not comply with input specifications for the buried object identification unit may be generated, thereby causing a problem that such external aperture synthesis processing data cannot be input, together with the underground exploration data, to the buried object identification unit.

In addition, the aperture synthesis processing requires the parameters specific to the device as mentioned earlier, such as the positional relationship between the transmitting antenna and the receiving antenna of the ground radar device, and the relative permittivity of the soil. Accordingly, the aperture synthesis processing performed outside the system is necessarily performed independently for each ground radar device or for each exploration area. So, if the aperture synthesis processing is performed at the external system, there is a problem that it is not easy to use the aperture-synthesized data at the same system.

In this regard, if the format of input data to the identification machine for identifying the buried object can be ensured within the same device, the aperture synthesis processing data can be reliably input to the identification machine, and the identification performance of the buried object can be improved, and it is thus believed that the identification of the buried object can be performed with high reliability.

In the invention disclosed in PTL1, the depth of the buried object is estimated by performing the aperture synthesis processing of the underground exploration data in advance by using a plurality of relative permittivities, and referring to the result of such processing at the buried object position detected by a buried object detector which is prepared separately.

However, candidates for the relative permittivities at the respective buried object positions become clear after the detection of the buried object positions by the buried object detector is finished. Therefore, there is a problem that the aperture synthesis exploration data to which the aperture synthesis processing has been applied by using an appropriate relative permittivity cannot be input to the buried object detector. In addition, the aperture synthesis processing needs to be performed as many times as a predefined number of the relative permittivities, so there has been a problem of difficulty to balance the calculation cost and an estimated resolution of the relative permittivity (and the depth of the buried object which is converted from the relative permittivity).

The present invention was devised in consideration of the above-described circumstances and proposes a buried object discriminating device and method for discriminating the buried object(s) with high reliability.

### MEANS TO SOLVE THE PROBLEMS

In order to solve the above-described problem, there is provided according to the present invention a buried object discriminating device for discriminating an underground buried object based on underground exploration data obtained by transmission and reception of electromagnetic waves to and from underground, wherein the buried object discriminating device includes: a relative permittivity estimation unit that estimates a relative permittivity of subsurface media based on the underground exploration data given from outside and outputs the estimated relative permittivity; an aperture synthesis processing unit that executes aperture synthesis processing on the underground exploration data by using the estimated relative permittivity and outputs aperture synthesis exploration data; and a buried object identification unit that executes identification processing for identifying the buried object based on the aperture synthesis exploration data and the underground exploration data and outputs information about the buried object as buried object information.

Moreover, there is provided according to the present invention a buried object discriminating method executed by a buried object discriminating device for discriminating an underground buried object based on underground exploration data obtained by transmission and reception of electromagnetic waves to and from underground, wherein the buried object discriminating method includes: a first step of inputting the underground exploration data given from outside; a second step of estimating a relative permittivity of subsurface media based on the input underground exploration data; a third step of executing aperture synthesis processing on the underground exploration data based on the estimated relative permittivity; a fourth step of executing identification processing for identifying the buried object based on aperture synthesis exploration data, which is obtained by executing the aperture synthesis processing on the underground exploration data, and the underground exploration data; and a fifth step of outputting information about the buried object, which is obtained by the identification processing, as buried object information.

The buried object discriminating device and method according to the present invention are designed to combine a processing unit for estimating the relative permittivity of the subsurface media based on the underground exploration data and a processing unit for applying the aperture synthesis processing to the same underground exploration data by using the estimated relative permittivity of the subsurface media, so the aperture synthesis exploration data can be reliably input to the buried object identification processing unit and a buried object recognition rate can thereby be enhanced. Furthermore, it becomes possible to improve a detection rate of the buried object identification unit and reduce a false recognition rate.

Furthermore, the present invention is configured so that: the underground exploration data in which information about an antenna structure of the ground radar device which generates the underground exploration data is included as antenna structure information is input; and at least one of the relative permittivity estimation unit and the aperture synthesis processing unit estimates the relative permittivity or executes the aperture synthesis processing on the underground exploration data based on a radar reflection formula corresponding to the antenna structure based on the antenna structure information included in the underground exploration data, among radar reflection formulas which are defined respectively for the respective antenna structures in advance, and the results are then input to the buried object identification unit. Here, the radar reflection formula(s) is defined as a model expressing time required for electromagnetic waves emitted from the ground radar device to reflect off the buried object and be then received by a receiving antenna.

With the buried object discriminating device according to the present invention, it is possible to maintain the accuracy of the estimation of the relative permittivity by the relative permittivity estimation unit and the aperture synthesis processing by the aperture synthesis processing even with respect to ground radar devices having different antenna structures, and it is also possible to keep the relative permittivity and the aperture synthesis exploration data, which are estimated or generated, maximally homogeneous as possible as the buried object discriminating device.

Furthermore, according to the present invention, the buried object discriminating device is provided with a depth conversion unit. The buried object information which is output from the buried object identification unit includes a position of the underground exploration data of the buried object on a timeline. The depth conversion unit is designed to convert the position on the timeline to the depth indicating the distance from a ground surface to the buried object based on the estimated relative permittivity estimated by the relative permittivity estimation unit.

In addition, after the buried object identification processing, the relative permittivity estimation unit re-estimates the relative permittivity based on the buried object information and the depth conversion unit converts the depth level of the buried object to the depth based on the re-estimated relative permittivity.

With the buried object discriminating device according to the present invention, the relative permittivity found in advance in order to be used for the aperture synthesis processing can be redirected within the device and the depth can be added to the buried object information which is output from the buried object discriminating device, so a user can intuitively recognize even the depth position of the buried object from the ground surface.

Furthermore, according to the present invention, the aperture synthesis processing unit re-executes the aperture synthesis processing based on an aperture synthesis processing re-execution flag which is input from outside by using the relative permittivity re-estimated by the relative permittivity estimation unit; the buried object identification unit re-executes the identification processing for identifying the buried object based on the aperture synthesis exploration data obtained by re-execution of the aperture synthesis processing by the aperture synthesis processing unit; and the depth conversion unit converts the depth level of the buried object to the depth of the buried object based on the buried object information, which is obtained by re-execution of the identification processing, and the relative permittivity re-estimated by the relative permittivity estimation unit.

The buried object discriminating device according to the present invention can re-generate the aperture synthesis exploration data, which is to be input to the buried object identification unit, based on the high-level identification result of the buried object by the buried object identification unit. Consequently, the convergence and S/N of the aperture synthesis exploration data which is input into the buried object identification unit can be improved and the accuracy in identification of the buried object by the buried object identification unit can be improved.

Furthermore, according to the present invention, there is provided a selection unit having a function to judge whether or not to re-execute the aperture synthesis processing by the aperture processing unit or the identification processing for identifying the buried object by the buried object identification unit, and the depth conversion processing by the depth conversion unit.

The buried object identification result obtained by inputting the aperture synthesis exploration data which has been updated by the re-generation is sometimes updated, so this identification result may be returned to the relative permittivity estimation unit and the re-estimation of the relative permittivity by the relative permittivity estimation unit and the aperture synthesis processing by the aperture synthesis processing unit may be performed many times.

By doing so, the convergence and S/N of the aperture synthesis exploration data which is to be input to the buried object identification unit can be improved and the identification accuracy of the buried object identification unit can be improved. In this process, the buried object discriminating device according to the present invention can automatically enhance the reliability in discrimination of the buried object by means of the selection unit that judges whether or not it is necessary to re-execute the aperture synthesis processing or the buried object identification processing, and the depth conversion processing. It can be performed with even higher reliability.

### ADVANTAGEOUS EFFECTS OF THE INVENTION

The buried object discriminating device and method capable of discriminating the buried object(s) with high reliability can be implemented according to the present invention.

### BRIEF DESCRIPTION OF DRAWINGS

Fig. 1A is a block diagram illustrating the configuration of a buried object discriminating device stated in claim 1;
Fig. 1B is a block diagram illustrating the configuration of a buried object management system according to a first embodiment;
Fig. 2 (A) is a diagram for explaining underground exploration data and (B) is a diagram for explaining aperture synthesis exploration data;
Fig. 3 is a diagram for explaining three-dimensional underground exploration data;
Fig. 4 shows diagrams for explaining buried object identification processing using a CNN model(s); and shows diagrams for explaining (A) the relationship between a CNN model and input data, (B) synthesis between underground exploration data and aperture synthesis exploration data, and (C) a method for using the underground exploration data and the aperture synthesis data, respectively, for the identification;
Fig. 5 is a flowchart of a buried object discriminating method stated in claim 14;
Fig. 6 (A) is an example of buried object information with respect to two-dimensional underground exploration data and (B) is an example of the buried object information with respect to three-dimensional underground exploration data;
Fig. 7 (A) is an example of depth-included buried object information with respect to the two-dimensional underground exploration data and (B) is an example of the depth-included buried object information with respect to the three-dimensional underground exploration data;
Fig. 8 is a block diagram of a buried object management system stated in claim 13;
Fig. 9 is a diagram illustrating a screen layout example of an underground exploration result screen according to a second embodiment;
Fig. 10 is a block diagram illustrating the configuration of a buried object management system according to a third embodiment;
Fig. 11 is a block diagram of a buried object discriminating device stated in claim 2;
Fig. 12 is a diagram illustrating a screen layout example of an underground exploration result screen according to the third embodiment;
Fig. 13 is a flowchart illustrating a processing sequence for buried object discriminating processing according to a fourth embodiment;
Fig. 14 is a block diagram illustrating the configuration of a buried object discriminating device stated in claim 3;
Fig. 15 is a block diagram illustrating the configuration of a buried object management system according to the fourth embodiment;
Fig. 16 (A) is a block diagram illustrating the configuration of a buried object discriminating device stated in claim 4 and (B) is a block diagram illustrating the configuration of a selection unit stated in claim 4;
Fig. 17 is a block diagram illustrating the configuration of a buried object management system according to a fifth embodiment;
Fig. 18 is a chart illustrating decision examples of re-execution flags of the selection unit stated in claim 4 according to a sixth embodiment;
Fig. 19 is a block diagram illustrating the configuration of the selection unit stated in claim 5;
Fig. 20 (A) is a block diagram illustrating the configuration of a buried object discriminating device indicated in claim 6 and (B) is a block diagram illustrating the configuration of a buried object learning model generation unit stated in claim 6;
Fig. 21 is a block diagram illustrating the configuration of a buried object management system according to a seventh embodiment;
Fig. 22 is a block diagram illustrating the configuration of a buried object learning model generation unit stated in claim 7;
Fig. 23 is a block diagram illustrating the configuration of a buried object discriminating device stated in claim 8;
Fig. 24 is a block diagram illustrating the configuration of a buried object management system according to an eighth embodiment;
Fig. 25 is a block diagram illustrating the configuration of a buried object discriminating device stated in claim 9;
Fig. 26 is a block diagram illustrating the configuration of a buried object management system according to a ninth embodiment;
Fig. 27 is a block diagram illustrating the configuration of a buried object discriminating device stated in claim 10;
Fig. 28 is a block diagram illustrating the configuration of a buried object management system according to a tenth embodiment;
Fig. 29 (A-1) to (B-4) are diagrams for explaining the difference in a radar reflection formula caused by the difference in an antenna structure;
Fig. 30 is a block diagram illustrating the configuration of a buried object discriminating device stated in claim 11;
Fig. 31 is a block diagram illustrating the configuration of a buried object management system according to an eleventh embodiment;
Fig. 32A is a flowchart illustrating a processing sequence for buried object discrimination processing by a buried object discriminating device according to the eleventh embodiment;
Fig. 32B is a flowchart illustrating a processing sequence for the buried object discrimination processing by the buried object discriminating device according to the eleventh embodiment;
Fig. 33 is a block diagram illustrating the configuration of a buried object learning model generation unit stated in claim 12;
Fig. 34 is a block diagram illustrating the configuration of a buried object management system according to a twelfth embodiment.

### DESCRIPTION OF EMBODIMENTS

An embodiment of the present invention will be described below in detail with respect to the drawings.

### (1) First Embodiment

### (1-1) Configuration of Buried Object Management System According to This Embodiment

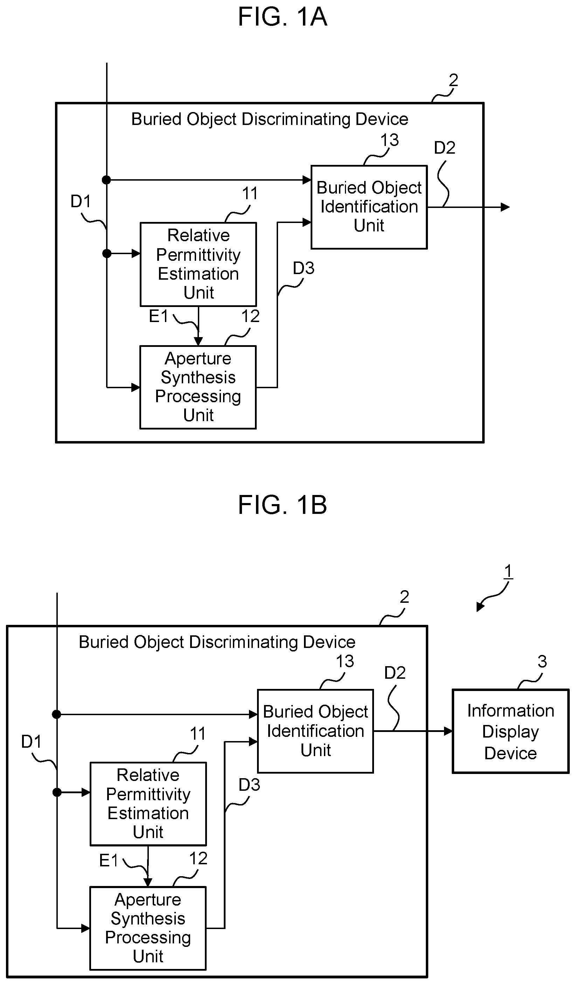

In Fig. 1B, 1 represents a buried object management system according to this embodiment as a whole. This buried object management system 1 is configured by including a buried object discriminating device 2 and an information display device 3.

The buried object discriminating device 2 is composed of a general-purpose computer device equipped with information processing resources such as a CPU (Central Processing Unit) and a memory. The buried object discriminating device 2 inputs underground exploration data D1 acquired by a ground radar device which is not illustrated in the drawing, discriminates the type, shape, position, size, etc., of a buried object based on the underground exploration data D1, and outputs the discrimination result as buried object information D2 to the information display device 3.

The information display device 3 is composed of, for example, a display device equipped with a liquid crystal display or an organic EL (Electro-Luminescence) display, etc. The information display device 3 generates a specified exploration result screen in which the discrimination results of the buried object are indicated based on the buried object information D2 given from the buried object discriminating device 2 and displays the generated exploration result screen.

### (1-2) Configuration of Buried Object Discriminating Device According to This Embodiment

Referring to Fig. 1A, the buried object discriminating device 2 according to this embodiment is configured by including a relative permittivity estimation unit 11, an aperture synthesis processing unit 12, and a buried object identification unit 13.

The relative permittivity estimation unit 11, the aperture synthesis processing unit 12, and the buried object identification unit 13 are embodied by execution of programs, which are stored in the aforementioned memory possessed by the buried object discriminating device 2, by the aforementioned CPU possessed by the buried object discriminating device 2.

The underground exploration data D1 is data acquired by transmission and reception of electromagnetic waves to and from the underground by the ground radar device and includes strength information and phase information of a received signal with respect to time intervals of the transmission and reception of the electromagnetic waves.

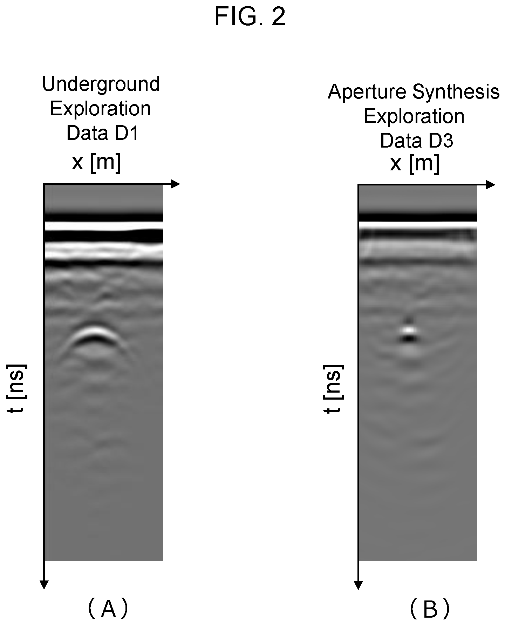

Fig. 2(A) illustrates an example of such underground exploration data D1. In Fig. 2(A), a vertical axis represents time (t) required after the ground radar device emits the electromagnetic waves into the ground until their reflected waves in the ground are received by the ground radar device; and a horizontal axis represents the distance (x) relative to an exploration traveling direction (a traveling direction of the ground radar device). Also, brightness indicates signal strength. The signal strength may be a positive or negative value and, furthermore, may be an imaginary number.

In Fig. 2(A), the underground exploration data D1 is indicated as a two-dimensional image of the vertical axis and the horizontal axis; however, the underground exploration data D1 acquired by, for example, an array-type ground radar device equipped with a plurality of transmitting antennas and receiving antennas becomes three-dimensional data including a plurality of pieces of the two-dimensional data shown in Fig. 2(A).

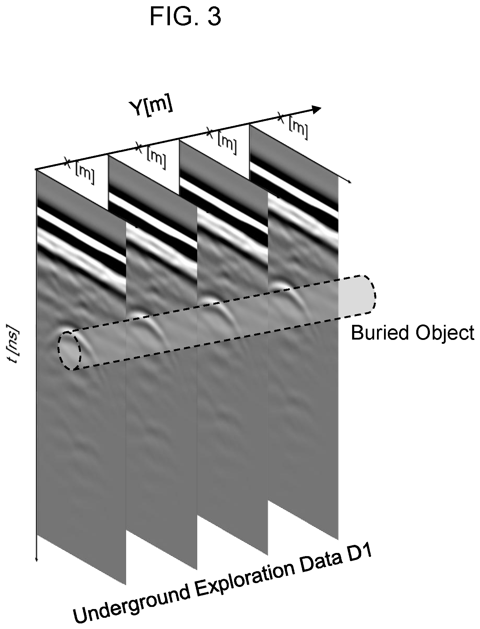

The three-dimensional data has an axis of a direction (Y) vertical to the exploration traveling direction in addition to the respective axes of the time (t) and the exploration traveling direction (x) as illustrated in, for example, Fig. 3.

The relative permittivity estimation unit 11 in Figs. 1A, B is a functional unit having a function to estimate the relative permittivity of the subsurface media based on the underground exploration data D1, which is input from outside, and output the estimated relative permittivity E1 to the aperture synthesis processing unit 12.

For example, as disclosed in NPL 2, the estimation of the relative permittivity can apply a fitting method performed by extracting clarity points (points with high signal strength) within images based on the underground exploration data D1 as reflection points of the electromagnetic waves, which are emitted from the ground radar device, on the buried object and changing parameters so that a logical arrival time would fit the underground exploration data D1 based on coordinates of the extracted clarity points (the reflection points) and the underground exploration data D1.

As the fitting method for changing the parameters so that the logical arrival time would fit the underground exploration data D1, for example, a fitting method disclosed in NPL 3 can be applied.

If any clear reflection points cannot be found in the underground exploration data D1, the relative permittivity estimation unit 11 may output a predefined relative permittivity. As the "predefined relative permittivity" in this case, the range of the relative permittivity which can actually be caused by soil and moisture constituting most part of the underground is normally given to the relative permittivity estimation unit 11 in advance. The relative permittivity in the underground varies depending on the location and a plurality of relative permittivities are thereby sometimes estimated in the underground exploration data D1, so in that case, the relative permittivity estimation unit 11 may output a plurality of estimated relative permittivities E1.

The aperture synthesis processing unit 12 is a functional unit having a function to execute specified aperture synthesis processing on the input underground exploration data D1 by using the estimated relative permittivity E1 of the subsurface media given from the relative permittivity estimation unit 11. The aperture synthesis processing unit 12 outputs aperture synthesis exploration data D3, which is obtained by such aperture synthesis processing and illustrated in Fig. 2(B), to the buried object identification unit 13. When there are a plurality of estimated relative permittivities E1 given from the relative permittivity estimation unit 11, a statistic such as an average value, a median value, a maximum value, or a minimum value of the estimated relative permittivities E1 may be calculated and then used.

The technology described on pages 262 to 267 of NPL 1 can be applied as an example of such aperture synthesis processing. Also, specified migration processing disclosed in PTL 1 is a kind of aperture synthesis processing and can be applied.

The electromagnetic waves emitted into the ground expand at a certain radiation angle, so the reflected waves from the buried object located not directly below are also received by the receiving antenna(s). Accordingly, the underground exploration data D1 usually has distortion. This distortion can be corrected by the aperture synthesis processing, so it is useful in determining the horizontal position and the depth position of the buried object and it is possible to obtain the advantageous effect of improving the buried object identification accuracy of the buried object identification unit 13 by also inputting the aperture synthesis exploration data D3 to the buried object identification unit 13.

Moreover, if the estimated relative permittivity E1 for each location estimated by the relative permittivity estimation unit 11 is given to the aperture synthesis processing unit 12, the aperture synthesis processing unit 12 may perform the aperture synthesis processing partially with respect to a specified data range including each location and output integrated data. When this happens and if the respective data ranges overlap with each other, representative values such as average values may be calculated and integrated with respect to the overlapping ranges.

The buried object identification unit 13 is a functional unit having a function to extract reflected images derived from the buried object based on the input underground exploration data D1 and the aperture synthesis exploration data D3 given from the aperture synthesis processing unit 12 and derive the buried object information D2 including the information about the type, shape, position, size, etc., of the buried object. The buried object information D2 derived by the buried object identification unit 13 is output from the buried object discriminating device.

Incidentally, the buried object identification unit 13 may derive the buried object information by using a buried object learning model which is a learning model of the buried object by AI or may derive the buried object information by using a rule base or multidimensional clustering. Furthermore, the buried object identification unit 13 may derive the buried object information D2 identified by a plurality of buried object learning models.

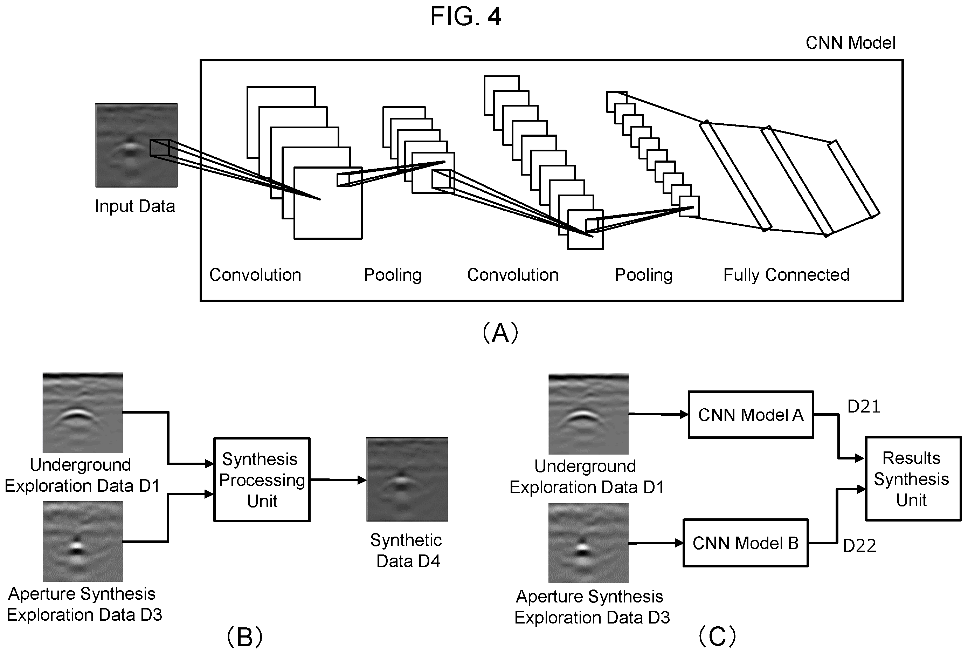

For example, a convolutional neural network (CNN: Convolutional Neural Network) model(s) can be used as the buried object learning model(s) by AI. Fig. 4 shows a configuration example of the buried object identification unit using a CNN model.

The CNN model is illustrated in Fig. 4(A) and can include a convolution layer and a pooling layer. In the convolution layer, a convolution operation is performed on input data by using a specified filter and each obtained value (feature map data) is output to the pooling layer. Activation using an activation function may be performed in a stage before outputting the feature map data from the convolution layer to the pooling layer. As the activation function, for example, a sigmoid function, a softmax function, or a ReLU (Rectified Linear Unit) can be applied.

The pooling layer is provided in a stage after the convolution layer and a data amount of the feature map data which is input from the convolution layer is reduced by a specified filter and the reduced feature map data is output. When doing this, for example, a maximum value or an average value can be used as a method for reducing the data amount. A fully connected layer is used as an output layer in the CNN model and combines the feature map data together and outputs them. A flatten function can be used to combine the feature map data together.

In order to input the underground exploration data D1 and the aperture synthesis exploration data D3 to the CNN model, synthetic data D4 can be generated by a synthesis processing unit by synthesizing the underground exploration data D1 and the aperture synthesis exploration data D3 in advance as illustrated in Fig. 4(B). As a method for synthesizing the underground exploration data D1 and the aperture synthesis exploration data D3 in this case, for example, it is possible to apply a method of calculating an average value, a linear sum, a maximum value, a minimum value, etc., of values of data at respective coordinates.

Moreover, as illustrated in Fig. 4(C), the buried object identification unit 13 causes respective identification machines (CNN models A and B), which are prepared corresponding to the underground exploration data D1 and the aperture synthesis exploration data D3, respectively, to derive buried object information D21, D22 respectively based on the underground exploration data D1 and the aperture synthesis exploration data D3 and output the buried object information D21, D22 derived respectively based on the underground exploration data D1 and the aperture synthesis exploration data D3 to a results synthesis unit. The results synthesis unit may output both or either one of the buried object information D21, D22 or information obtained by selecting shared information from these pieces of buried object information D21, D22, as the buried object information D2.

By preparing the identification machines which are prepared respectively corresponding to the underground exploration data D1 and the aperture synthesis exploration data D3, It is possible to perform the identification appropriate for feature values which the underground exploration data D1 and the aperture synthesis exploration data D3 respectively have, and to acquire the buried object information D2 according to these features. Then, by mutually complementing the buried object information D2 based on these pieces of buried object information D2, a recall rate and a precision rate of the output of the buried object identification unit 13 can be improved.

The buried object information D2 derived from the buried object identification unit 13 is output to the information display device 3, so that a specified exploration result screen on which the information such as the type, shape, position, and size of the buried object included in the buried object information D2 is indicated is displayed on the information display device 3.

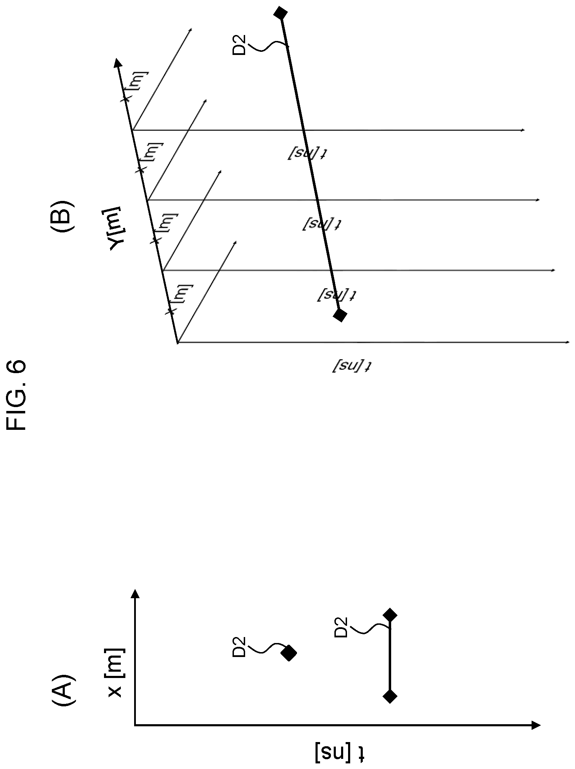

An example of the buried object information D2 displayed on the information display device 3 will be explained by using Fig. 6. Fig. 6(A) is an example of the buried object information with respect to the two-dimensional underground exploration data. The position in the buried object information D2 is expressed as the position relative to the exploration traveling direction and the time required for the reflected waves in the ground to be received by the underground radar device. In a case of a point object, the position may be expressed as one point; and in a case of a linear object, the position may be expressed as a line segment connecting a start point and an end point. Fig. 6(B) is an example of the buried object information with respect to the three-dimensional underground exploration data. In this case, the buried object information D2 also has a component in a vertical direction to the exploration traveling direction.

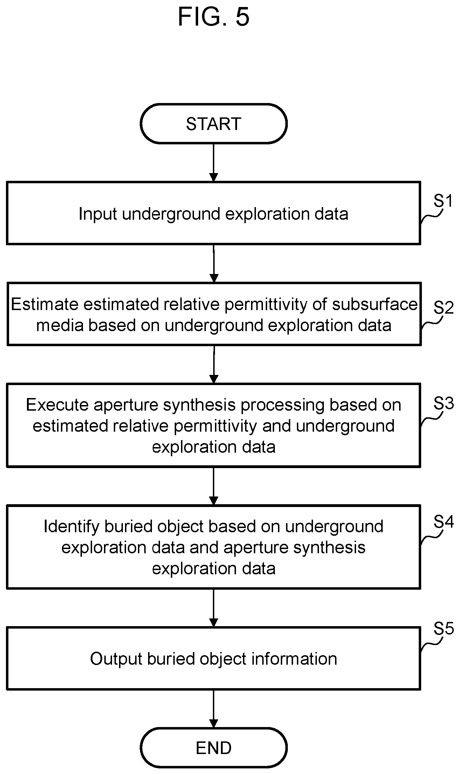

Fig. 5 illustrates a buried object discriminating method for the buried object discriminating device 2 having the above-described configuration.

Firstly, the underground exploration data D1 is input (S1).

Next, the relative permittivity estimation unit 11 estimates the estimated relative permittivity E1 of the subsurface media based on the input underground exploration data D1 and outputs the estimated relative permittivity E1 to the aperture synthesis processing unit 12 (S2). Moreover, the aperture synthesis processing unit 12 executes the aperture synthesis processing on the input underground exploration data D1 by using the estimated relative permittivity E1 given from the relative permittivity estimation unit 11 and outputs the aforementioned thus-obtained aperture synthesis exploration data D3 to the buried object identification unit 13 (S3).

The buried object identification unit 13 identifies the buried object based on the input underground exploration data D1 and the aperture synthesis exploration data D3 given from the aperture synthesis processing unit 12 and generates the buried object information D2 including the information such as the type, shape, position, and/or size of the identified buried object (S4).

Then, the buried object identification unit 13 outputs the generated buried object information D2 (S5). As a result, the buried object discrimination results are output based on such buried object information D2 and this series of the buried object discriminating method terminates.

### (1-3) Advantageous Effects of This Embodiment

If the relative permittivity used by the aperture synthesis processing is not an accurate value, images which should originally be integrated are processed excessively and the images become distorted as disclosed in PTL 1 described earlier. As the images become distorted, an area with a high probability where the buried object may exist apparently expands, thereby causing impairment of the positional accuracy of the identified buried object. Moreover, there is a possibility that the buried object identification unit may falsely recognize the excessive distortion as false images, which can cause false detection. Therefore, the identification of the buried object by the buried object identification unit 13 by using the underground exploration data D1 which underwent the synthesis aperture processing without using the accurate relative permittivity can cause the impairment of the credibility of the buried object discriminating device.

In this regard, the buried object discriminating device 2 according to this embodiment integrally encompasses the relative permittivity estimation unit 11 which estimates the relative permittivity of the subsurface media based on the underground exploration data D1 and the aperture synthesis processing unit 12 which applies the aperture synthesis processing to the same underground exploration data D1 by using the estimated relative permittivity E1 estimated by the relative permittivity estimation unit 11, it is possible to ensure the reproducibility of the underground exploration data D1 which is to be input to the buried object identification unit 13 and on which the aperture synthesis processing has been executed (the aperture synthesis exploration data D3). Consequently, if this buried object discriminating device 2 is employed, the buried object identification performance of the buried object identification unit 13 can be improved and the buried object can thereby be discriminated with high reliability.

### (2) Second Embodiment

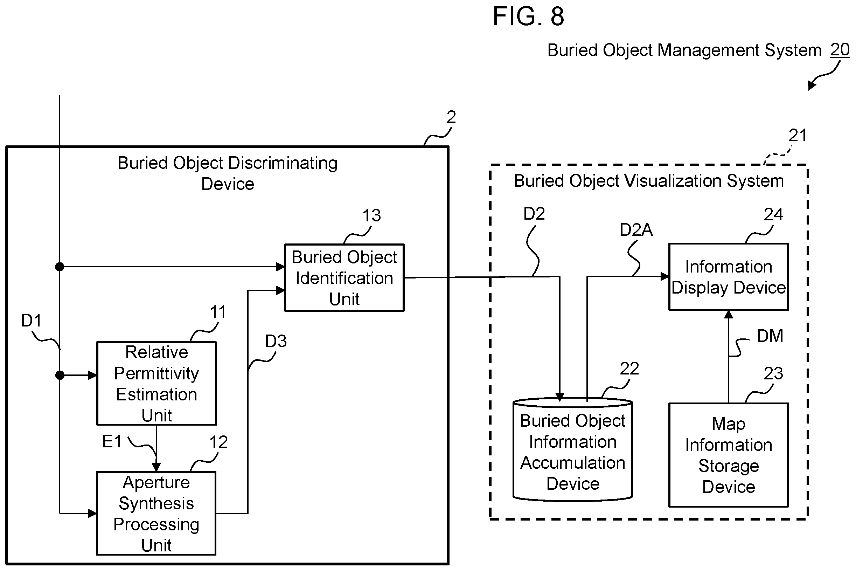

Fig. 8, in which parts corresponding to those in Figs. 1A and B are indicated by assigning the same reference numerals to those in Figs. 1A and B, illustrates a buried object management system 20 according to a second embodiment. This buried object management system 20 is configured in a manner similar to the buried object management system 1 according to the first embodiment, except that a buried object visualization system 21, instead of the information display device 3, is connected to the buried object discriminating device 2.

The buried object visualization system 21 is configured by including a buried object information accumulation device 22, a map information storage device 23, and an information display device 24. The buried object information accumulation device 22 is composed of, for example, a large-capacity, nonvolatile storage device such as an external hard disk drive. Then, the buried object information D2 which is output from the buried object discriminating device 2 is sequentially stored and accumulated in the buried object information accumulation device 22.

Moreover, the map information storage device 23 is also composed of, for example, a large-capacity, nonvolatile storage device such as an external hard disk drive. The map information storage device 23 stores at least map information of an exploration area in advance.

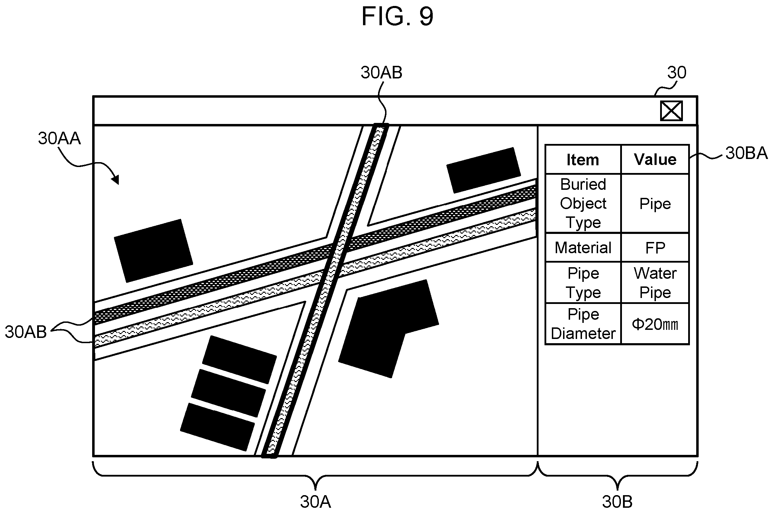

The information display device 24 is composed of an information processing device including, for example, a liquid crystal display or an organic EL display. The information display device 24 generates and displays, based on the information such as the type, shape, position, and/or size of the buried object which is included in a buried object information group D2A stored in the buried object information accumulation device 22 and map information DM of the exploration area stored in the map information storage device 23, an underground exploration result screen 30 which integrates these pieces of information and is illustrated in Fig. 9.

This underground exploration result screen 30 is configured by including a map display area 30A and a buried object information display area 30B. Then, in the map display area 30A, a map 30AA on which buried object images 30AB are superimposed is displayed; and in the buried object information display area 30B, a list 30BA in which, for example, the type, material, and/or size of buried objects are indicated is displayed.

If the buried object management system 20 according to this embodiment having the above-described configuration is employed, it is possible to obtain, in addition to the advantageous effects obtained by the first embodiment, the advantageous effects of being capable of managing the buried object information group D2A based on the underground exploration data D1, which are acquired at various locations and days and times, with the single buried object visualization system 21 and presenting various kinds of information about the buried objects based on the buried object information group D2A to the user in an easily understandable manner.

### (3) Third Embodiment

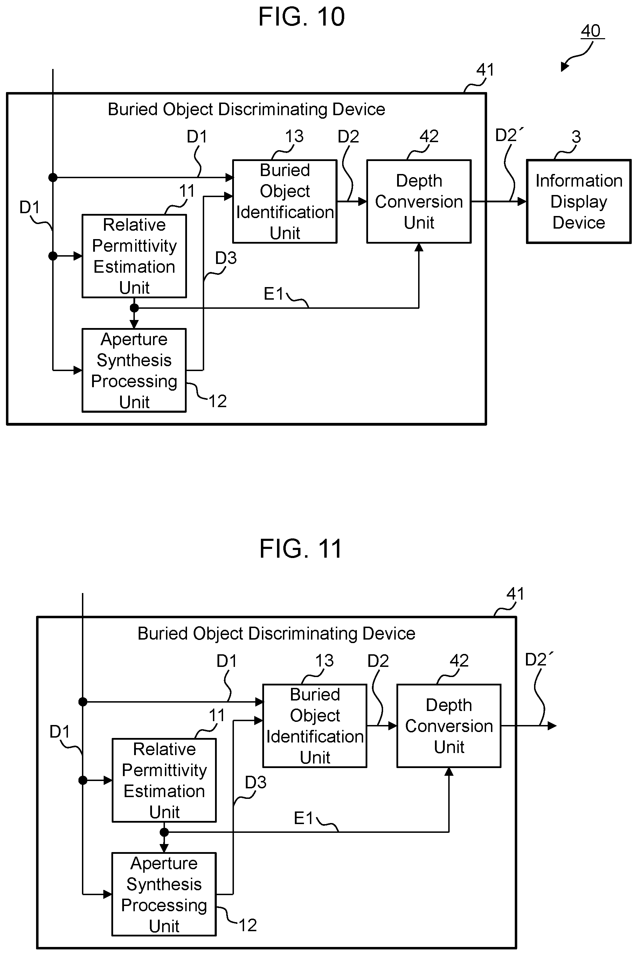

Fig. 10, in which parts corresponding to those in Fig. 1B are indicated by assigning the same reference numerals to those in Fig. 1B, illustrates a buried object management system 40 according to a third embodiment. This buried object management system 40 is significantly different from the buried object management system 1 according to the second embodiment in that a buried object discriminating device 41 stated in claim 2 and illustrated in Fig. 11 is provided with a depth conversion unit 42. The depth conversion unit 42 is a functional unit which is embodied by the aforementioned CPU included in the buried object discriminating device 41 by executing the relevant program stored in the aforementioned memory included in the buried object discriminating device 41.

The depth conversion unit 42 is notified by the relative permittivity estimation unit 11 of the estimated relative permittivity E1 estimated by the relative permittivity estimation unit 11. Then, the depth conversion unit 42 calculates the distance from the ground surface to the buried object (hereinafter referred to as a "depth" or "depth position") by referring to the estimated relative permittivity E1 based on the information about the position of the buried object on the timeline, which is included in the buried object information D2 given from the buried object identification unit 13 (information about time required after the ground radar device emits the electromagnetic waves into the ground until the electromagnetic waves are reflected off the buried object and then return to the ground radar device), and outputs depth-included buried object information D2' including the information of the calculated depth. The depth-included buried object information D2' is output to the information display device 3 and a specified exploration result screen on which the information such as the type, shape, position, and size of the buried object included in the depth-included buried object information D2' is indicated is thereby displayed on the information display device 3.

If there are a plurality of estimated relative permittivities E1 under this circumstance, the depth conversion unit 42 uses some of the estimated relative permittivities E1 estimated at a position closest to the position of the buried object included in the buried object information D2 of the buried object which is identified by the buried object identification unit 13.

Moreover, as illustrated in Fig. 3, if reactions derived from the buried object (clarity points) appear in a plurality of two-dimensional cross-sections in the underground exploration data D1 with respect to one buried object, a relative permittivity estimation unit 43 sometimes estimates different relative permittivities for the respective cross-sections of the same buried object (the plurality of relative permittivities are estimated for the same buried object).

In such a case, the depth conversion unit 42 may be designed to: extract the range of the underground exploration data D1 regarding which it can be determined that the same buried object is identified based on the buried object information D2 of the buried object identified by the buried object identification unit 13; extracts a plurality of relative permittivities to be used for the depth conversion from the estimated relative permittivities E1 within the above-described range; and adopt, for example, an average value of the extracted relative permittivities as the relative permittivity to be used for the depth conversion of the buried object.

Moreover, if the size of the buried object included in the buried object information D2 is equal to or larger than a specified size, the range of the underground exploration data D1 may be defined with respect to each one part thereof, a representative value of the estimated relative permittivities E1 within that range may be calculated based on the relative permittivity estimated by the relative permittivity estimation unit 43 with respect to the defined range, and the depth conversion unit 42 may use the calculated representative value.

Next, an explanation will be provided about a buried object depth conversion method of the depth conversion unit 42. The underground exploration data D1 has at least the exploration traveling direction (an x-direction in Fig. 2(A)) and a time direction (a t-direction in Fig. 2(A)) as illustrated in Fig. 2(A). The time t used here is the amount of time elapsed after the ground radar device emits the electromagnetic waves into the ground until the ground radar device receives the underground reflected waves of the electromagnetic waves.

Therefore, the buried object identification unit 13 identifies the position(s) of the buried object usually on an x-t face. Of these positions, the positions in the time-axis direction are sufficient to know the relative positional relationship with the plurality of identified depths of the buried object, but do not represent absolute positions of the depths within the area where the exploration was performed.

In order to calculate the absolute position of the buried object in the depth direction, it is necessary to calculate a velocity v of the electromagnetic waves emitted from the ground radar device to travel underground and convert it based on the position t of the buried object on the timeline.

Here, the conversion from the time t to the depth z can be performed according to, for example, the following formula.
[Math. 1] $z = vt$

Furthermore, the velocity v of the electromagnetic waves which travel underground can be expressed as a formula indicated below by using a speed of light in vacuum c and an underground relative permittivity ε_{γ}.
[Math. 2] $v = \frac{c}{\sqrt{{ε}_{γ}}}$

So, the depth conversion unit 42 converts the position of the buried object on the timeline, which is included in the buried object information D2, to the depth by using these Formula (1) and Formula (2) and the estimated relative permittivity E1 estimated by the relative permittivity estimation unit 11 and outputs the depth-included buried object information D2' including the information of the converted depth. Then, the information display device 3 displays the depth-included buried object information D2'.

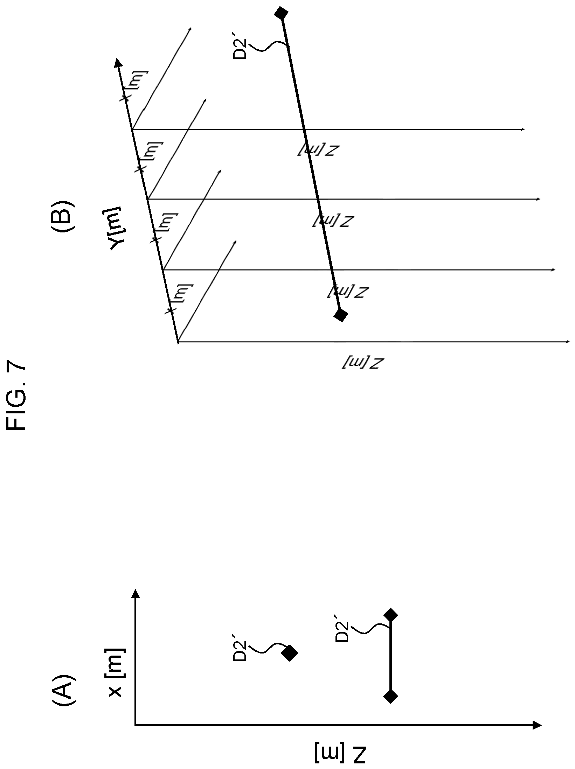

An example of the depth-included buried object information D2' displayed on the information display device 3 will be explained by using Fig. 7. Fig. 7(A) is an example of the buried object information with respect to the two-dimensional underground exploration data. Of the depth-included buried object information D2', the position is expressed with the position and depth relative to the exploration traveling direction. In a case of a point object, the position may be expressed as one point; and in a case of a linear object, the position may be expressed as a line section connecting a start point and an end point. Fig. 7(B) is an example of the depth-included buried object information D2' with respect to the three-dimensional underground exploration data. In this case, the depth-included buried object information D2' also has a component in vertical direction to the exploration traveling direction.

If the buried object management system 40 according to this embodiment having the above-described configuration is employed, the absolute position of the buried object in the depth direction within the exploration area is displayed on the information display device 3, so it is possible to also obtain, in addition to the advantageous effects obtained by the first embodiment, the advantageous effect of enabling the user to intuitively confirm even the depth position of the buried object.

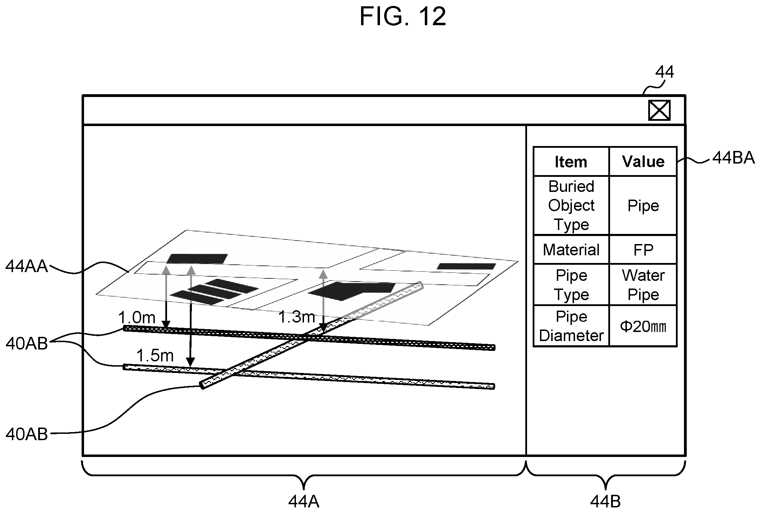

Furthermore, instead of the information display device 3 connected to the buried object discriminating device 41 illustrated in Fig. 11, the buried object visualization system 21 illustrated in Fig. 8 is connected, the depth-included buried object information D2' is accumulated in the buried object information accumulation device 22, an underground exploration result screen 44 as illustrated in, for example, Fig. 12 is generated and displayed based on the accumulated buried object information group D2A and the map information DM of the exploration area which is stored in the map information storage device 23.

This underground exploration result screen 44 is configured by including a map display area 44A and a buried object information display area 44B. Then, the map display area 44A displays respective images 44AA, 44AB of an exploration face and buried objects which are three-dimensionally drawn, and numerical values indicating vertical distances from the exploration face to these buried objects. Also, the buried object information display area 44B displays a list 44BA where the type, material, and/or size of the buried object(s) are indicated.

If the buried object management system having the above-described configuration is employed, it is also possible to obtain the advantageous effect of enabling the user to intuitively confirm the burial positions between the buried objects by managing, together with the absolute positions of the buried objects in the depth direction within the exploration area, the depth-included buried object information D2', which is generated based on the plurality of pieces of the underground exploration data D1, by superimposing the depth-included buried object information D2' on the same map information DM.

### (4) Fourth Embodiment

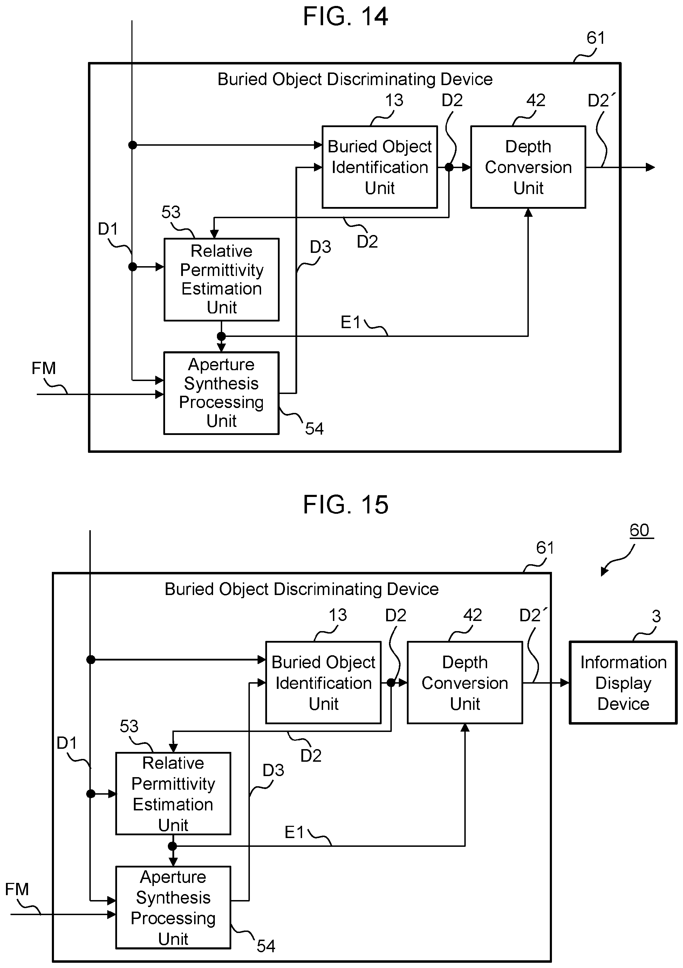

Fig. 15, in which parts corresponding to those in Fig. 10 are indicated by assigning the same reference numerals to those in Fig. 10, illustrates a buried object management system 60 according to a fourth embodiment. This buried object management system 60 is different from the buried object management system 40 according to the third embodiment in that: the buried object identification unit 13 for a buried object discriminating device 61 illustrated in Fig. 14 and stated in claim 3 outputs the buried object information D2 to a relative permittivity estimation unit 53 in addition to the depth conversion unit 42; the relative permittivity estimation unit 53 re-estimates the relative permittivity of the subsurface media as necessary based on the buried object information D2 and the underground exploration data D1; and an aperture synthesis processing unit 54 can re-execute the aperture synthesis processing based on the estimated relative permittivity E1 obtained by the re-estimation and the aperture synthesis processing re-execution flag FM which is input from outside of the buried object discriminating device 61.

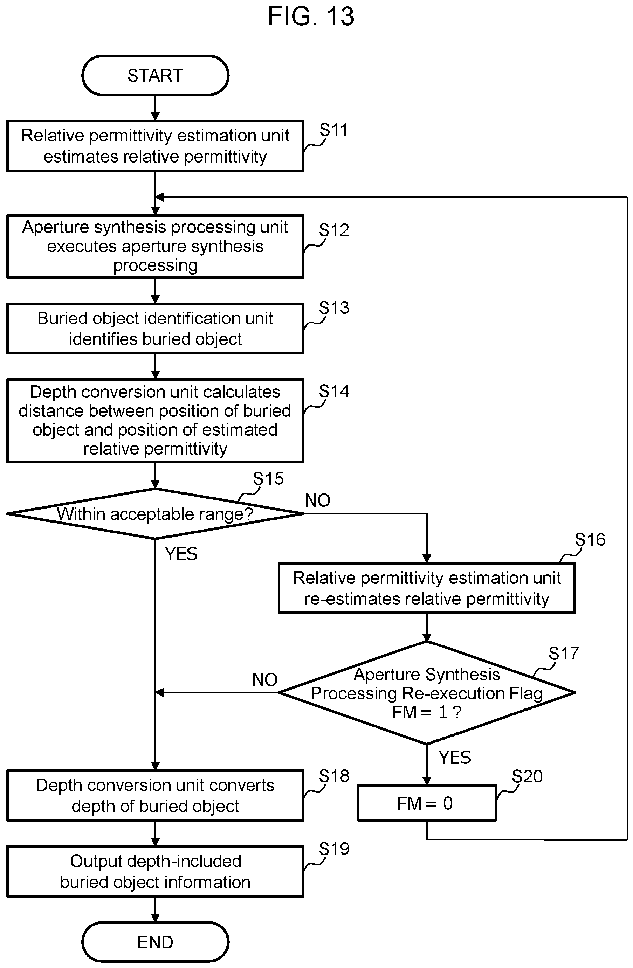

Fig. 13 illustrates a flow of buried object discriminating processing performed at the buried object discriminating device 61 according to this embodiment regarding the discrimination of the buried object. This buried object discriminating processing is started when the underground exploration data D1 is given to the buried object discriminating device 61.

The relative permittivity estimation unit 53 estimates the relative permittivity of the subsurface media based on the input underground exploration data D1 and outputs the estimated relative permittivity E1 to the aperture synthesis processing unit 54 (S11). Moreover, the aperture synthesis processing unit 54 executes the aperture synthesis processing on the input underground exploration data D1 by using the estimated relative permittivity E1 given from the relative permittivity estimation unit 53 and outputs the aforementioned thus-obtained aperture synthesis exploration data D3 to the buried object identification unit 13 (S12).

The buried object identification unit 13 identifies the buried object based on the input underground exploration data D1 and the aperture synthesis exploration data D3 given from the aperture synthesis processing unit 54, generates the buried object information D2 including the information such as the type, shape, position, and/or size of the identified buried object, and outputs the generated buried object information D2 to the depth conversion unit 42 (S13).

The depth conversion unit 42 compares the position estimated by the estimated relative permittivity E1 with the position of the buried object included in the buried object information D2 based on the position of the buried object included in the buried object information D2 given from the buried object identification unit 52 and calculates the distance between the position of the relative permittivity E1 estimated by the relative permittivity estimation unit 53 and the position of the buried object included in the buried object information D2 (S14). Then, the depth conversion unit 42 judges whether this distance is within an acceptable range or not (S15).

To obtain an affirmative result in this judgment means there is a high possibility that the estimated relative permittivity E1 estimated by the relative permittivity estimation unit 53 may be accurate. Therefore, under this circumstance, the buried object identification unit 52 does not output the buried object information D2, which is then generated, to the relative permittivity estimation unit 53.

As a result, at the depth conversion unit 42, the position of the buried object on the timeline is converted to the depth based on the buried object information D2 from the buried object identification unit 52 and the estimated relative permittivity E1 given from the relative permittivity estimation unit 53 (S18).

Moreover, the depth conversion unit 42 generates the depth-included buried object information D2' including the converted depth position and outputs the generated buried object information D2' (S19). As a result, this buried object discriminating processing terminates.

On the other hand, to obtain a negative result in the judgment of step S15 means there is a possibility that the estimated relative permittivity E1 estimated by the relative permittivity estimation unit 53 may not be accurate. Therefore, under this circumstance, the buried object identification unit 52 outputs the buried object information D2, which is then generated, to the relative permittivity estimation unit 53.

The relative permittivity estimation unit 53 re-estimates the relative permittivity of the subsurface media based on the buried object information D2 given from the buried object identification unit and the underground exploration data D1 (S16).

Specifically, the relative permittivity estimation unit 53 re-estimates the relative permittivity by executing fitting processing for changing the parameter(s) so that the logical arrival time would fit the underground exploration data D1 by using the position of the buried object identified by the buried object identification unit 52 instead of the positions of the aforementioned clarity points.

Then, the aperture synthesis processing unit 54 judges whether the aperture synthesis processing re-execution flag FM indicates 1 which prompts the re-execution (S17). To obtain a negative result in the judgment of step S17 means that the user determines it is unnecessary to re-execute the aperture synthesis processing, so the aperture synthesis processing unit 54 executes steps S18, S19 and the processing terminates. To obtain an affirmative result in the judgment of step S17 means that it is necessary to re-execute the aperture synthesis processing. In this case, the aperture synthesis processing unit 54 changes the aperture synthesis processing re-execution flag FM to 0 (S20) and then provides feedback to step S12 to re-execute the aperture synthesis processing. The subsequent processing is as described earlier.

As a result, at the depth conversion unit 42, the position of the buried object on the timeline is converted to the depth based on the buried object information D2 from the buried object identification unit 52 and the re-estimated value of the relative permittivity given from the relative permittivity estimation unit 53 (S18).

Moreover, the depth conversion unit 42 generates the buried object information D2' including the converted depth and outputs the generated buried object information D2' (S19). As a result, this buried object discriminating processing terminates.

Incidentally, even when the estimated relative permittivity E1 corresponding to the buried object information has already been estimated, it may be designed to output a negative result in step S15 and the relative permittivity estimation unit 53 may thereby re-estimate the estimated relative permittivity E1 by using the buried object information D2 in addition to the underground exploration data D1. In this case, if the buried object information D2 of the buried object identified by the buried object identification unit 13 includes the depth position, horizontal position, type, shape, and size of the buried object, the relative permittivity estimation unit 53 estimates the relative permittivity in step S16 by using such logical arrival time as assumed based on the parameters such as the depth position, horizontal position, type, shape, and size of the buried object and as being more highly reasonable than the logical arrival time assumed upon the first estimation.

Under this circumstance, if the relative permittivity estimation unit 53 executes the fitting method described in NPL 2 for assuming the clarity points as the reflection points of the electromagnetic waves on the buried object in the aforementioned step S11, there is fear that reflected images which are measured at, for example, a non-metal object and which are not clear may be overlooked.

In this regard, when the position of the estimated relative permittivity E1 estimated by the relative permittivity estimation unit 53 is far from the position of the buried object identified by the buried object identification unit 13, the buried object discriminating device 61 according to this embodiment causes the relative permittivity estimation unit 53 to re-estimate the estimated relative permittivity E1 by using positional information of the buried object identified by the buried object identification unit 13 and the position of the buried object on the timeline is converted to the depth based on the estimated relative permittivity E1 obtained by this re-estimation, so that the depth conversion can be performed by using the estimated relative permittivity E1 which is re-estimated, also with respect to the reflected images which are overlooked when assuming the clarity points as the reflection points of the buried object, and the depth accuracy of the buried object can be improved.

Furthermore, if the relative permittivity used in the aperture synthesis processing is not an accurate value, images which should originally be integrated by the aperture synthesis processing are processed excessively and the images become distorted. Accordingly, if the buried object identification unit 13 performs the identification by using the underground exploration data D1 (the aperture synthesis exploration data D3) to which the aperture synthesis processing was applied by using the inaccurate relative permittivity, this will cause, for example, false detection.

In this regard, the buried object discriminating device 61 according to this embodiment re-executes the aperture synthesis processing by using the relative permittivity re-estimated by the relative permittivity estimation unit 53, so the aperture synthesis processing using the appropriate relative permittivity can be applied to the underground exploration data D1.

Therefore, according to this embodiment, it is possible to obtain the advantageous effects of being capable of further improving the buried object identification accuracy of the buried object identification unit 13 and thus being capable of discriminating the buried object with much higher reliability.

### (5) Fifth Embodiment

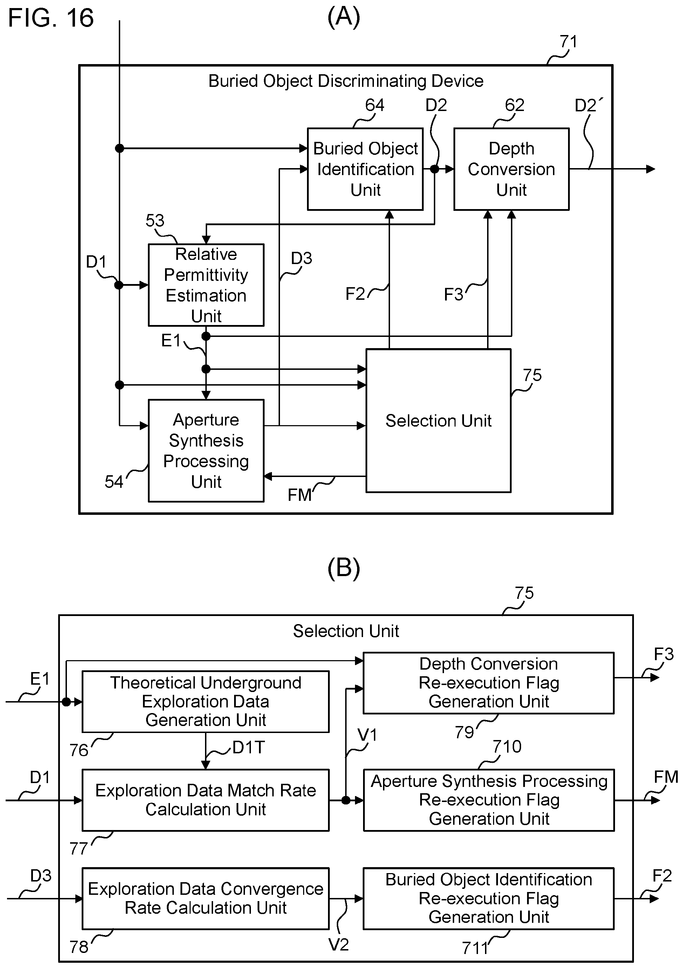

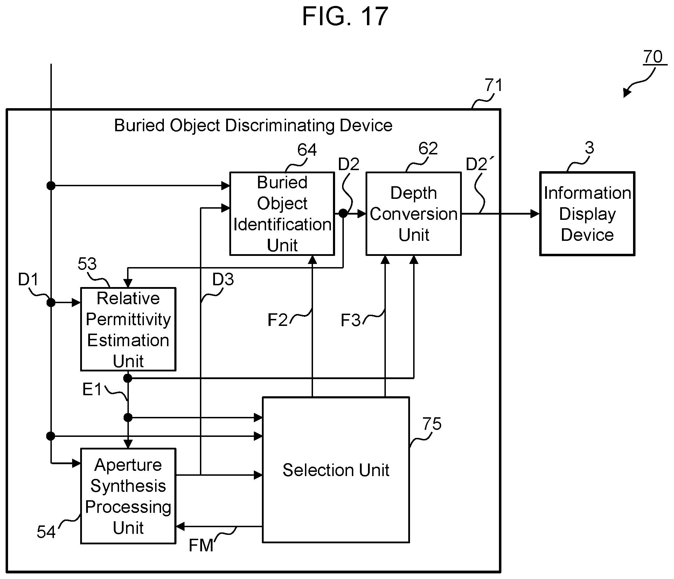

Fig. 17, in which parts corresponding to those in Fig. 15 are indicated by assigning the same reference numerals to those in Fig. 15, illustrates a buried object management system 70 according to a fifth embodiment. The buried object management system 70 in Fig. 17 is significantly different from the buried object management system 61 according to the fourth embodiment in that as compared to the buried object discriminating device 61, a selection unit 75 is provided like a buried object discriminating device 71 stated in claim 4 and illustrated in Fig. 16(A).

The selection unit 75 for the buried object management system 70 in Fig. 17 is a functional unit which is embodied by the aforementioned CPU possessed by the buried object discriminating device 71 by executing the relevant program stored in the aforementioned memory possessed by the buried object discriminating device 71. This selection unit 75 has a function to output a depth conversion re-execution flag F3, an aperture synthesis processing re-execution flag FM, and a buried object identification re-execution flag F2 to control whether the aperture synthesis processing unit 54 should re-execute the aperture synthesis processing or not, whether the buried object identification unit 64 should re-execute the buried object identification or not, and whether the depth conversion unit 62 should re-execute the depth conversion or not, based on the estimated relative permittivity E1 estimated by the relative permittivity estimation unit 53, and the underground exploration data D1 and the aperture synthesis exploration data D3.

Specifically, Fig. 16(B) shows a block diagram of the selection unit 75 and will be explained below. The estimated relative permittivity E1 which is input to the selection unit 75 is input to a theoretical underground exploration data generation unit 76 and a depth conversion re-execution flag generation unit 79. The theoretical underground exploration data generation unit 76: assumes that a buried object exists at the position regarding which the estimated relative permittivity E1 is estimated; generates a theoretical reflected image based on the estimated relative permittivity E1; and outputs it as theoretical underground exploration data D1T to an exploration data match rate calculation unit 77. As a method for generating the theoretical underground exploration data D1T, a numerical value simulation using, for example, a finite element method or a finite-difference time-domain method may be performed.

The exploration data match rate calculation unit 77 calculates an exploration data match rate V1 indicating an exploration data match rate based on the underground exploration data D1 and the theoretical underground exploration data D1T. When the underground exploration data D1 and the theoretical underground exploration data D1T are composed of arrays of the same size, the match rate can be calculated as, for example, an average value of an absolute value of the difference between them. When the exploration data match rate is high, it indicates that the underground exploration data D1 can be explained well by the estimated relative permittivity E1 estimated by the relative permittivity estimation unit 53; and, therefore, it can be used to evaluate the validity of the estimated relative permittivity E1. The calculated exploration data match rate V1 is output to a depth conversion re-execution flag generation unit 79 and an aperture synthesis processing re-execution flag generation unit 710.

An exploration data convergence rate calculation unit 78 calculates a convergence rate of the aperture synthesis exploration data D3, as an exploration data convergence rate V2, based on the aperture synthesis exploration data D3. Regarding a method for calculating the convergence rate, for example, a method disclosed in NPL 4 can be used. Since the aperture synthesis processing is processing for correcting the distortion of the reflected image, the exploration data convergence rate V2 which indicates its convergence rate can evaluate the validity of the aperture synthesis processing executed by the aperture synthesis processing unit 54. The exploration data convergence rate V2 is output to a buried object identification re-execution flag generation unit 711.

The depth conversion re-execution flag generation unit 79 retains the estimated relative permittivity E1 or the exploration data match rate V1, or both of them. Then, the depth conversion re-execution flag F3 is generated based on a change of the retained estimated relative permittivity E1 or the retained exploration data match rate V1, or both of them.

The aperture synthesis processing re-execution flag generation unit 710 retains the exploration data match rate V1. Then, the aperture synthesis processing re-execution flag FM is generated based on a change of the retained exploration data match rate V1.

The buried object identification re-execution flag generation unit 711 retains the exploration data convergence rate V2. Then, the buried object identification re-execution flag F2 is generated based on a change of the retained exploration data convergence rate V2.

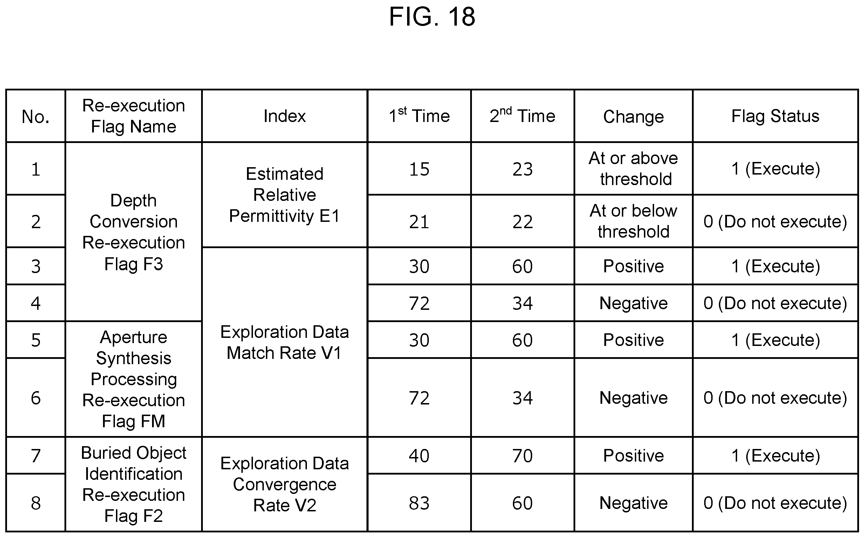

Some of generation patterns of the depth conversion re-execution flag F3, the aperture synthesis processing re-execution flag FM, and the buried object identification re-execution flag F2 will be explained based on specific examples indicated in Fig. 18.

Regarding the depth conversion re-execution flag F3, when there is a difference equal to or larger than a defined threshold between the first and second results of the estimated relative permittivity E1 as shown in Fig. 18, it is considered possible that a significant difference may be caused between the conversion results by the depth conversion unit 62 and, therefore, a flag status of the depth conversion re-execution flag F3 is set to "1" to indicate that the depth conversion processing should be re-executed (No.1). On the contrary, when the difference is equal to or smaller than the specified threshold, it is possible to think that any significant difference in the depth may not be caused even if the depth conversion processing is executed again; and, therefore, the depth conversion re-execution flag F3 is set to "0" to indicate that the depth conversion processing should not be re-executed (No.2). Moreover, if the numerical value difference in the exploration data match rate V1 of the first time as compared to that of the second time is positive, it is possible to think that the estimated permittivity E1 which is more reasonable may have been obtained; and, therefore, the depth conversion re-execution flag F3 is set to "1" to indicate that the depth conversion processing should be re-executed (No.3). On the contrary, if the numerical value difference in the exploration data match rate V1 of the first time as compared to that of the second time is negative, it is possible that the estimated permittivity E1 which is not more reasonable may have been obtained; and, therefore, the depth conversion re-execution flag F3 is set to "0" to indicate that the depth conversion processing should not be re-executed (No.4).

Regarding the aperture synthesis processing re-execution flag FM as well, if the numerical value difference in the exploration data match rate V1 of the first time as compared to that of the second time is positive, it is possible to think that the estimated permittivity E1 which is more reasonable may have been obtained; and, therefore, the aperture synthesis processing re-execution flag FM is set to "1" to indicate that the aperture synthesis processing should be re-executed (No.5). On the contrary, if the numerical value difference in the exploration data match rate V1 of the first time as compared to that of the second time is negative, it is possible to think that the estimated permittivity E1 which is not more reasonable may have been obtained; and, therefore, the aperture synthesis processing re-execution flag FM is set to "0" to indicate that the aperture synthesis processing should not be re-executed (No.6).

Regarding the buried object identification re-execution flag F2 as well, if the numerical value difference in the exploration data convergence rate V2 of the first time as compared to that of the second time is positive, it is possible to think that the aperture synthesis exploration data D3 which is more reasonable may have been obtained; and, therefore, the buried object identification re-execution flag F2 is set to "1" to indicate that the buried object identification processing should be re-executed (No.7). On the contrary, if the numerical value difference in the exploration data convergence rate V2 of the first time as compared to that of the second time is negative, it is possible to think that the aperture synthesis exploration data D3 which is not more reasonable may have been obtained; and, therefore, the buried object identification re-execution flag F2 is set to "0" to indicate that the buried object identification processing should not be re-executed (No.8).

Incidentally, the judgment of the reasonability before and after the re-execution of the estimated relative permittivity E1, the exploration data match rate V1, and the exploration data convergence rate V2 by the selection unit 75 may be performed, other than based on the comparison of whether large or small before and after the re-execution as described above, based on whether a predetermined threshold is achieved or not or whether a change rate exceeds a predetermined threshold or not.

If the buried object management system 70 according to this embodiment having the above-described configuration is employed, it is possible to re-generate the aperture synthesis exploration data D3 which is to be input to the buried object identification unit 64, based on the high-level buried object identification result of the buried object identification unit 64. Consequently, the quality of the aperture synthesis exploration data D3 which is to be input to the buried object identification unit 64 can be improved and the buried object identification accuracy of the buried object identification unit 64 can be improved.

Incidentally, the buried object identification result (the buried object information D2) to which the updated aperture synthesis exploration data D3 is input may sometimes be updated, so this identification result may be returned to the relative permittivity estimation unit 53 and the re-estimation of the relative permittivity by the relative permittivity estimation unit 53, the aperture synthesis processing by the aperture synthesis processing unit 54, and the aforementioned selecting acts by the selection unit 75 may be performed many times. By doing so, the aperture synthesis exploration data D3 which is to be input to the buried object identification unit 64 can be improved and the identification accuracy of the buried object identification unit 64 can be improved.

In this case, for example, every time the relative permittivity is re-estimated by the relative permittivity estimation unit 53, that relative permittivity among the data shown in Fig. 18 may be overwritten as an estimated value of the first relative permittivity or data of a plurality of number of times may be retained.

By doing so, every time the relative permittivity is re-estimated by the relative permittivity estimation unit 53, the re-estimated relative permittivity and the aperture synthesis exploration data D3 generated by the aperture synthesis processing unit 54 based on that relative permittivity become high-quality, so that the buried object identification accuracy of the buried object identification unit 64 can be further improved. Therefore, if the buried object management system 70 according to this embodiment is employed, it is possible to discriminate the buried object with much higher reliability.

### (6) Sixth Embodiment

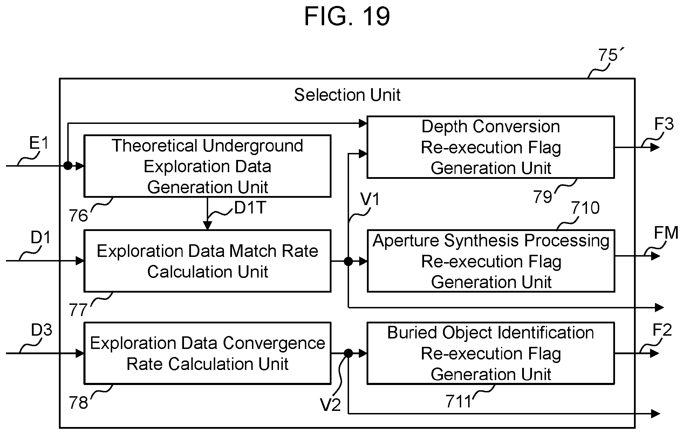

Fig. 19, in which parts corresponding to those in Fig. 16(B) are indicated by assigning the same reference numerals to those in Fig. 16(B), illustrates a selection unit 75' for a buried object management system according to a sixth embodiment. The selection unit 75' in Fig. 19 is different from the selection unit 75 according to the fifth embodiment in that it can output the exploration data match rate V1 and the exploration data convergence rate V2.

The exploration data match rate V1 and the exploration data convergence rate V2 which are output from the selection unit 75' are values for evaluating the relative permittivity estimation processing by the relative permittivity estimation unit 53 and the aperture synthesis processing by the aperture synthesis processing unit 54, respectively; and in the sixth embodiment, the exploration data match rate V1 and the exploration data convergence rate V2 are output to outside the buried object discriminating device.

By doing so, the information display device 3 which is connected to the buried object discriminating device can display the exploration data match rate V1 and the exploration data convergence rate V2, so the user can check the buried object identification result as well as the validity at the buried object discriminating device. Therefore, if the buried object management system according to this embodiment is employed, the buried object can be discriminated with much higher reliability.

### (7) Seventh Embodiment

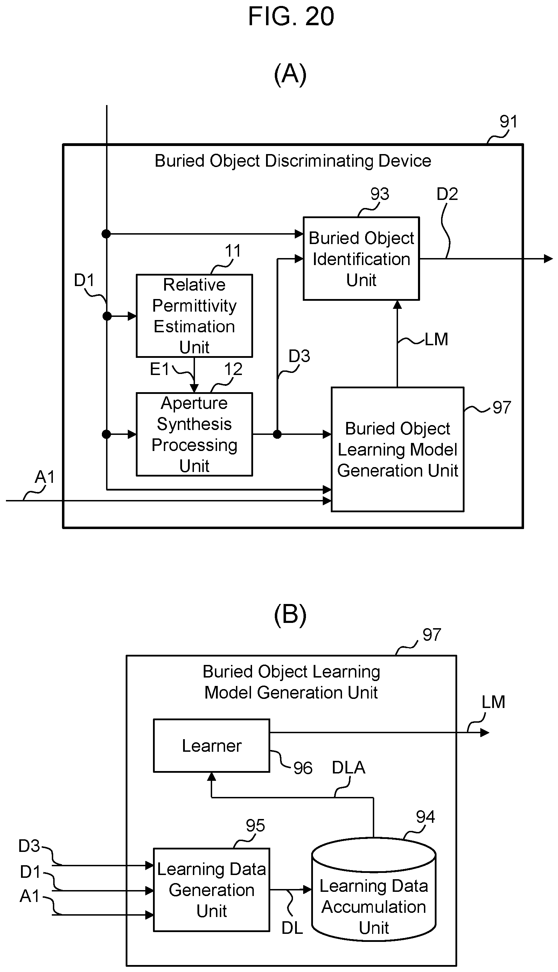

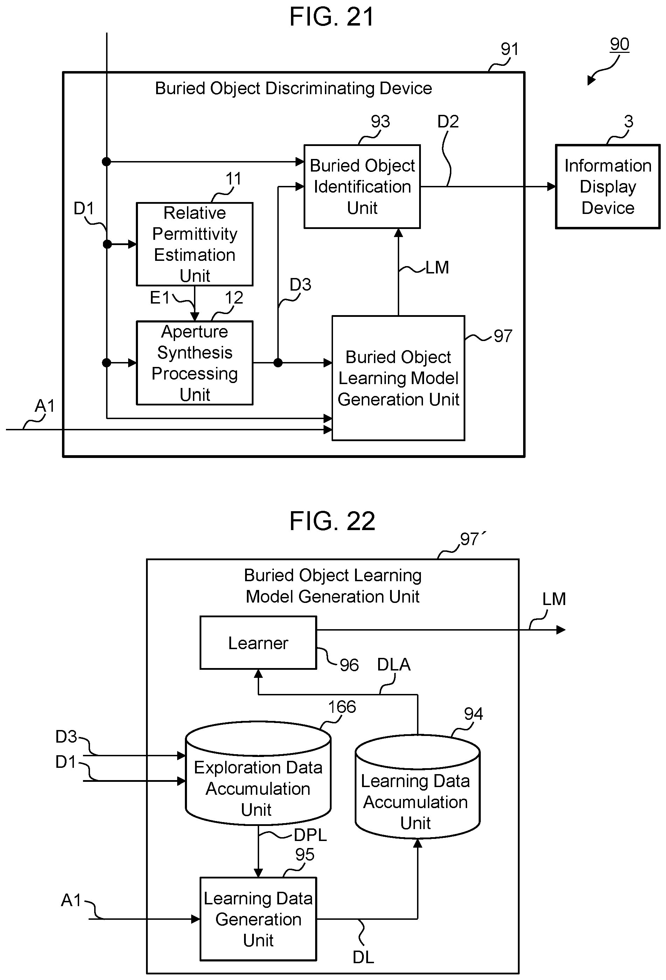

Fig. 21, in which parts corresponding to those in Fig. 1B are indicated by assigning the same reference numerals to those in Fig. 1B, illustrates a buried object management system 90 according to a seventh embodiment. This buried object management system 90 is different from the first embodiment in that: a buried object discriminating device 91 in Fig. 20(A) has a buried object learning model generation unit 97; the buried object learning model generation unit 97 generates a buried object learning model LM by using the acquired underground exploration data D1 and the aperture synthesis exploration data D3 generated within its own device, and buried object existence information A1 including information indicating whether the buried object at least exists or not with respect to the exploration area regarding which the underground exploration data D1 was obtained; and the buried object management system 90 identifies the buried object by using the generated buried object learning model LM.

Practically, in the case of this embodiment, a learning data generation unit 95 generates learning data DL based on the underground exploration data D1, the aperture synthesis exploration data D3, which is generated based on the underground exploration data D1, and the buried object existence information A1 and accumulates the learning data DL in a learning data accumulation unit 94. Here, Fig. 20(B) describes that the learning data accumulation unit 94 is included in the buried object learning model generation unit 97; however, the learning data accumulation unit 94 may be placed inside or outside the buried object discriminating device 91 for the buried object learning model generation unit 97.

Then, the buried object learning model generation unit 97 generates the buried object learning model LM by causing a learner 96 to learn, for example, the type, shape, position, and size of the buried object with respect to the underground exploration data D1 and/or the aperture synthesis exploration data D3 by using a learning data group DLA accumulated in the memory as described above. This buried object learning model LM is, for example, an AI (Artificial Intelligence) model configured by the neural network.

Then, if the underground exploration data D1 obtained by exploration work, for example, for a new exploration area is given and/or if the aperture synthesis exploration data D3 is given from the aperture synthesis processing unit 12, the buried object identification unit 93 identifies the type, shape, position, size, etc., of the buried object based on the buried object learning model LM and outputs the buried object information D2 based on the identification result to the information display device 3.

Then, the buried object learning model generation unit 97 causes the learner 96 to re-learn the type, shape, position, size, etc., of the buried object with respect to the underground exploration data D1 and/or the aperture synthesis exploration data D3 by using the learning data group DLA which continues to be accumulated and updates the buried object learning model LM as necessary.

If the buried object management system 90 according to this embodiment having the above-described configuration is employed, the aperture synthesis exploration data D3 corresponding to the underground exploration data D1 is generated within the buried object discriminating device 91, so that the association between the underground exploration data D1 and/or the aperture synthesis exploration data D3 and the buried object information A1 such as the type, shape, position, and size of the buried object can be performed automatically within the buried object discriminating device 91.

Therefore, as compared to the conventional case where the aperture synthesis exploration data D3 is generated outside the buried object discriminating device 91, costs and efforts required for associating the underground exploration data D1 and/or the aperture synthesis exploration data D3 with the buried object information A1 such as the type, shape, position, and size of the buried object can be reduced.

Moreover, with this buried object management system 90, the buried object learning model LM is updated as appropriately as described above, so that the buried object identification performance of the buried object identification unit 93 can be continuously improved.

Consequently, if the buried object management system 90 according to this embodiment is employed, it is possible to obtain, in addition to the advantageous effects obtained by the first embodiment, the advantageous effect of being capable of constructing the buried object discriminating device with high buried object identification performance at low cost.

Furthermore, as this embodiment includes a buried object learning model generation unit 97' which is illustrated in Fig. 22 and is stated in claim 7, instead of the buried object learning model generation unit 97, the underground exploration data D1 and the aperture synthesis data D3 are always accumulated in an exploration data accumulation unit 166; and as the buried object existence information A1 within the exploration area is input, the learning data generation unit 95 generates learning data DL by using the accumulated exploration data group DPL.

Consequently, with the buried object management system 90 according to this embodiment, even in a case where the buried object existence information was successfully obtained when it was not the time of the acquisition of the underground exploration data regarding the exploration area, the association of the learning data DL can be performed automatically inside the buried object management system 90 and appropriate learning data DL can be accumulated. Then, as the buried object learning model LM is updated as appropriate, it is possible to obtain the advantageous effect of being capable of continuously improving the buried object identification performance of the buried object identification unit 93 and also operating the buried object management system 90.

### (8) Eighth Embodiment

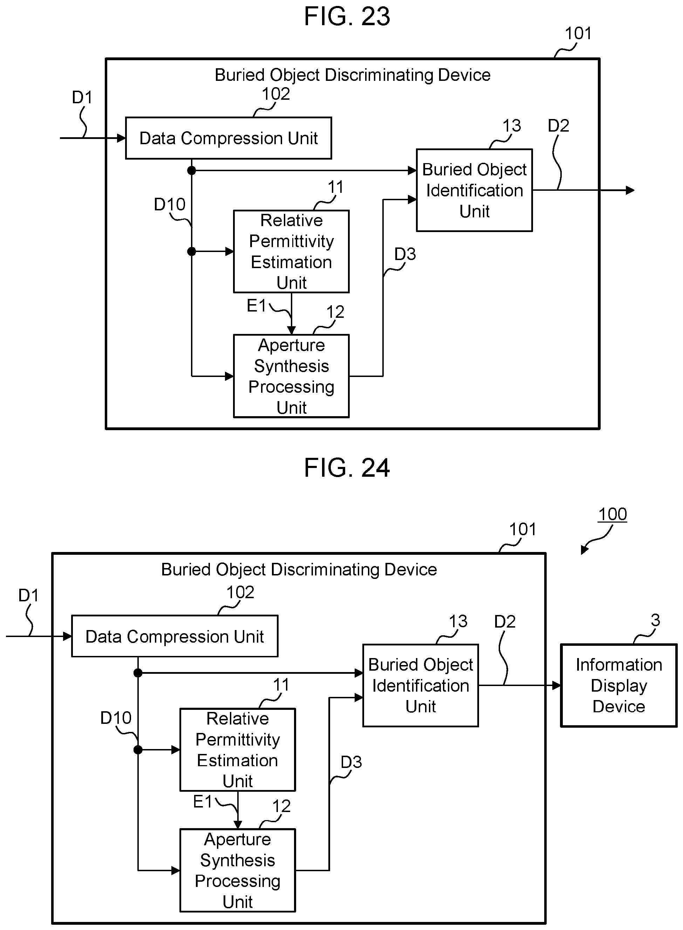

Fig. 24, in which parts corresponding to those in Figs. 1A, B are indicated by assigning the same reference numerals to those in Figs. 1A, B, illustrates a buried object management system 100 according to an eighth embodiment. This buried object management system 100 is significantly different from the buried object management system 1 according to the first embodiment in that the buried object discriminating device 2 which is illustrated in Fig. 1A and is stated in claim 1 is additionally provided with a data compression unit 102 for performing compression processing on the input underground exploration data D1 as illustrated in Fig. 23 indicating a buried object discriminating device 101 of claim 8.

Practically, the data compression unit 102 compresses the input underground exploration data D1 so as to, for example, extract data of sparse points with respect to the x-axis or the y-axis or both the x-axis and the y-axis in Fig. 2(A). However, it is possible to apply various other compression methods such as reducing a bit count of data at each point as the compression method by the data compression unit 102 for compressing the underground exploration data D1.

Then, the data compression unit 102 outputs the compressed underground exploration data D1 as compressed underground exploration data D10 to the relative permittivity estimation unit 11, the aperture synthesis processing unit 12, and the buried object identification unit 13, respectively. As a result, each subsequent processing at the relative permittivity estimation unit 11, the aperture synthesis processing unit 12, and the buried object identification unit 13 is executed based on the compressed underground exploration data D10.

If the buried object management system 100 according to this embodiment having the above-described configuration is employed, it is possible to obtain, in addition to the advantageous effects obtained by the first embodiment, the advantageous effect of being capable of reducing the calculation cost of each processing at the relative permittivity estimation unit 11, the aperture synthesis processing unit 12, and the buried object identification unit 13 for the buried object discriminating device 101.

Furthermore, with this buried object management system 100, it is also possible to obtain the advantageous effect of being capable of reducing the memory capacity required for various kinds of arithmetic processing at the buried object discriminating device 101 and also discriminating the buried object at much lower cost and in shorter time.

### (9) Ninth Embodiment

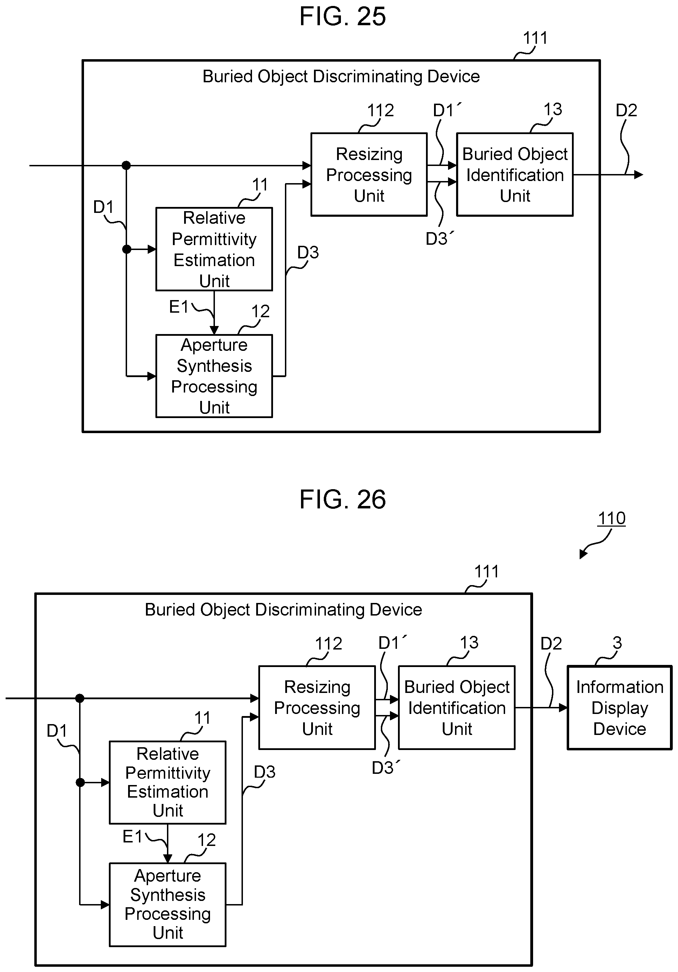

Fig. 26, in which parts corresponding to those in Figs. 1A, B are indicated by assigning the same reference numerals to those in Figs. 1A, B, illustrates a buried object management system 110 according to a ninth embodiment. This buried object management system 110 is significantly different from the buried object management system 1 according to the first embodiment in that, as illustrated in Fig. 25 which shows a buried object discriminating device 111 of claim 9, the buried object discriminating device 111 is additionally provided with a resizing processing unit 112 for resizing the underground exploration data D1 and the aperture synthesis exploration data D3.

Practically, the input underground exploration data D1 and the aperture synthesis exploration data D3, which is output from the aperture synthesis processing unit 12, are given to the resizing processing unit 112. Then, the resizing processing unit 112 executes resizing processing on the underground exploration data D1 and the aperture synthesis exploration data D3 and outputs the resized underground exploration data D1 and the resized aperture synthesis exploration data D3', which have been resized, to the buried object identification unit 13.

Incidentally, the "resizing processing" herein mentioned is processing for increasing or decreasing the number of data points located along the x-axis direction and the y-axis direction in Fig. 2(A). The data size after resizing such as 500×1000, for example, in a case of two-dimensional data as illustrated in Fig. 2(A) is set to the resizing processing unit in advance.

Then, the resizing processing unit 112 resizes the underground exploration data D1 and the aperture synthesis exploration data D3, which are input, to the specified data size. Incidentally, the same size may be specified, or separate sizes may be specified as the resized data size of the underground exploration data D1 and the aperture synthesis exploration data D3.

Regarding the method for changing the number of data points in the resizing processing, it is possible to use interpolation methods such as a nearest neighbor interpolation method, a linear interpolation method, a Lagrangian interpolation method, a barycentric interpolation method, and a quadratic spline interpolation method.

If the buried object management system 110 according to this embodiment having the above-described configuration is employed, the size of data which flows to subsequent processing can be kept constant within the buried object discriminating device 111 by the resizing processing; and, therefore, for example, even if the underground exploration data is acquired by a ground radar device of a manufacturer requiring a different data size or of a different model and the size of the generated underground exploration data D1 changes, it is possible to make a part or whole of such data redirectable.

Therefore, with this buried object management system 110, for example, even if the buried object identification unit 13 has the configuration to identify the buried object by using the buried object learning model LM as in the seventh embodiment, it is possible to eliminate the need for altering the network size of the buried object learning model LM (Fig. 19), thereby making it possible to obtain the advantageous effect of being capable of constructing a more general-purpose system.

### (10) Tenth Embodiment

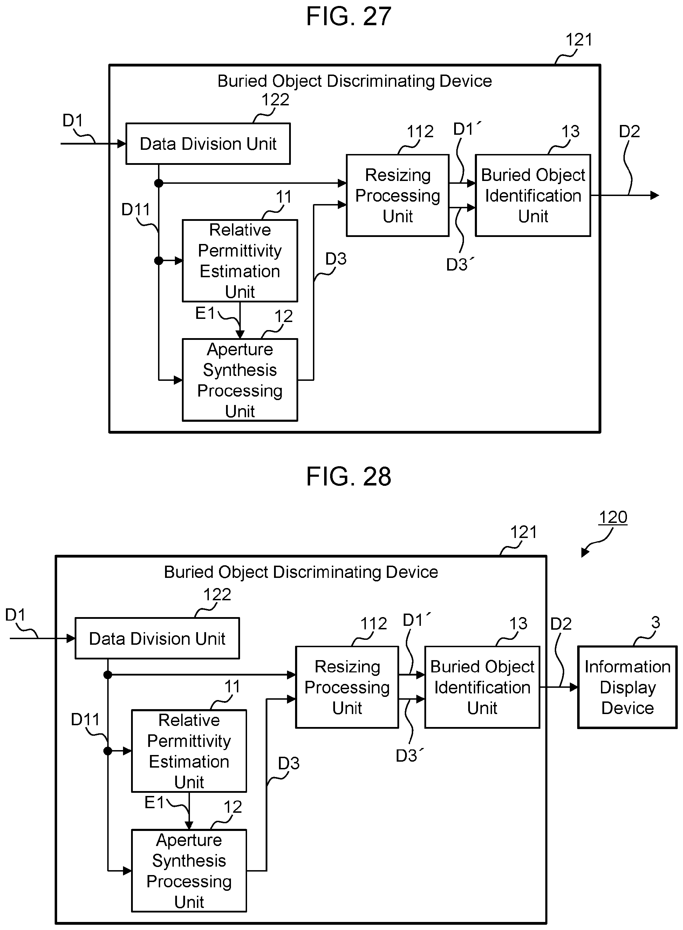

Fig. 28, in which parts corresponding to those in Fig. 21 are indicated by assigning the same reference numerals to those in Fig. 21, illustrates a buried object management system 120 according to a tenth embodiment. This buried object management system 120 is configured in a similar manner to the buried object management system 110 in the ninth embodiment, except that a buried object discriminating device 121 which is illustrated in Fig. 27 and is stated in claim 10 is additionally provided with a data division unit 122 for dividing the underground exploration data D1.

Practically, the underground exploration data D1 which is input to the buried object discriminating device 121 is given to the data division unit 122. Then, the data division unit 122 performs division processing for dividing this underground exploration data D1 into a plurality of pieces of data and outputs the divided underground exploration data (hereinafter referred to as the divided underground exploration data) D11 sequentially to the relative permittivity estimation unit 11, the aperture synthesis processing unit 12, and the resizing processing unit 112.

The division of the underground exploration data D1 in this case is performed, for example, in the exploration traveling direction (the x-axis direction in Fig. 2(A)) and the underground exploration data D1 is divided into a plurality of pieces of the divided underground exploration data D11 corresponding to a specified distance in a real space. For example, if a movement distance of the ground radar device in the exploration traveling direction is 100 m, the data division unit 122 divides the underground exploration data D1 into 10 pieces of the divided underground exploration data D11 regarding which each movement distance in the exploration traveling direction is 10 m.

If the buried object management system 120 according to this embodiment having the above-described configuration is employed, it is possible to reduce the calculation cost of the relative permittivity estimation unit 11, the aperture synthesis processing unit 12, and the buried object identification unit 13 for the buried object discriminating device 121 without, for example, causing a reduction of the information amount due to the data compression as in the ninth embodiment.

Moreover, with this buried object management system 120, the memory capacity at the buried object discriminating device 121 can be also reduced, thereby making it possible to obtain the advantageous effect of being capable of performing the buried object discrimination processing at much lower cost and in shorter time.

### (11) Eleventh Embodiment

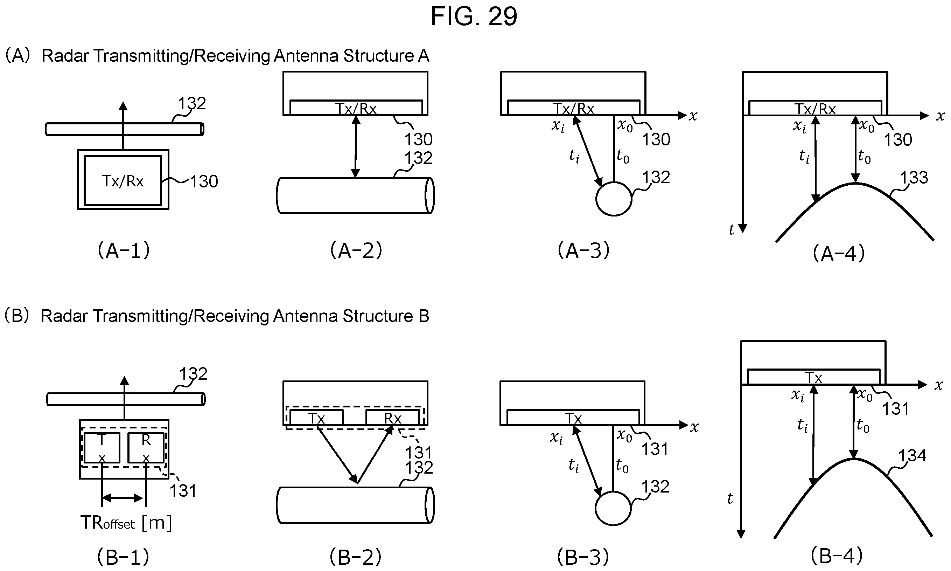

A plurality of different types of structures of transmitting and receiving antennas exist as the ground radar device. Figs. 29(A-1) and (B-1) illustrate representative structure examples of such transmitting and receiving antennas. Fig. 29(A-1) is an antenna structure that is configured as a transmitting and receiving antenna 130 in which a transmitting antenna Tx and a receiving antenna Rx are integrated; and Fig. 29(B-1) is an antenna structure of a transmitting and receiving antenna 131 in which the transmitting antenna Tx and the receiving antenna Rx are provided separately.

In the case of the antenna structure in Fig. 29(A-1), many of the electromagnetic waves, which are emitted from the transmitting and receiving antenna 130 into the ground reflect off a buried object 132 which is buried directly below it; and the reflected waves are received by the transmitting and receiving antenna 130 as illustrated in Fig. 29(A-2). Moreover, in the case of the antenna structure in Fig. 29(B-1), of the reflected waves which are emitted from the transmitting antenna Tx of the transmitting and receiving antenna 131 into the ground and reflect off the buried object 132 located directly below it, only the reflected waves of some electromagnetic waves which have entered the buried object 132 at a certain angle of incidence are received by the receiving antenna Rx of the transmitting and receiving antenna 131 as illustrated in Fig. 29(B-2).

As is obvious from the comparison between Fig. 29(A-2) and Fig. 29(B-2), the route of the electromagnetic waves which are emitted from the transmitting and receiving antenna 130, 131 and then reflect off the buried object 132 until they are received by the transmitting and receiving antenna 130, 131 varies depending on the antenna structure of the ground radar device and, accordingly, the amount of time required after the transmitting and receiving antenna 130, 131 emits the electromagnetic waves until the reflected waves of the electromagnetic waves which have reflected off the buried object 132 are received by the transmitting and receiving antenna 130, 131 also varies. Regarding this reception time, if the horizontal axis is the position of the ground radar device and the vertical axis is the time required for reception, it is possible to express the reception time as the entire edges 133, 134 in Figs. 29(A-4), (B-4).

For example, when the antenna structure of the ground radar device is Fig. 29(A-1), assuming that as illustrated in Fig. 29(A-3), x₀ represents an x-coordinate of the position at the transmitting and receiving antenna 130 of the ground radar device directly above the buried object 132, t₀ represents an amount of time for the electromagnetic waves emitted from the above-mentioned position to reflect off the buried object 132 and then return to the transmitting and receiving antenna 130, tᵢ represents an amount of time for the electromagnetic waves emitted from the position with an x-coordinate xᵢ at the transmitting and receiving antenna 130 to reflect off the buried object 132 and then return to the transmitting and receiving antenna 130, and v represents a velocity of the electromagnetic waves to travel underground, a radar reflection formula for expressing the time tᵢ is defined as indicated below.
[Math. 3] ${t}_{i} = \sqrt{{\left(\frac{{x}_{i} - {x}_{0}}{v}\right)}^{2} + {t}_{0}^{2}}$

Furthermore, when the antenna structure of the ground radar device is Fig. 29(B-1), assuming that as illustrated in Fig. 29(B-3), x₀ represents the x-coordinate of the position at the transmitting antenna Tx of the transmitting and receiving antenna 131 directly above the buried object 132, t₀ represents the amount of time for the electromagnetic waves emitted from the above-mentioned position to reflect off the buried object 132 and then return to the receiving antenna Rx, tᵢ represents the amount of time for the electromagnetic waves emitted from the position with the x-coordinate xᵢ at the transmitting antenna Tx to reflect off the buried object 132 and then return to the receiving antenna Rx, v represents the velocity of the electromagnetic waves to travel underground, and TR_{offset} (see Fig. 29(B-1)) represents the distance between the transmitting antenna Tx and the receiving antenna Rx in the transmitting and receiving antenna 131, a radar reflection formula for expressing the time tᵢ is defined as indicated below.
[Math. 4] ${t}_{i} = \sqrt{{\left(\frac{{x}_{i} - {x}_{0}}{v}\right)}^{2} + {{t}_{0}}^{2} + {\left(\frac{{TR}_{offset}}{2 v}\right)}^{2}}$

In this case, for example, with the buried object discriminating device 2 according to the first embodiment, the relative permittivity estimation unit 11 and the aperture synthesis processing unit 12 estimate the relative permittivity and perform calculation to correct the distortion of the reflected image(s) by modeling, as the radar reflection formula, the time required for the electromagnetic waves emitted from the ground radar device to reflect off the buried object and then be received by the receiving antenna.

Accordingly, if the estimation of the relative permittivity and the aperture synthesis processing are performed by using the same radar reflection formula without distinguishing between the underground exploration data D1 from the ground radar device of the antenna structure in Fig. 29(A-1) and the underground exploration data D1 from the ground radar device of the antenna structure in Fig. 29(B-1), there is fear that a significant error may occur between the estimated relative permittivity and the actual relative permittivity and the aperture-synthesized image may become distorted.

So, this embodiment prevents the significant error from occurring between the estimated relative permittivity and the actual relative permittivity and prevents the aperture-synthesized image from becoming distorted by switching the radar reflection formula according to the antenna structure of the ground radar device.

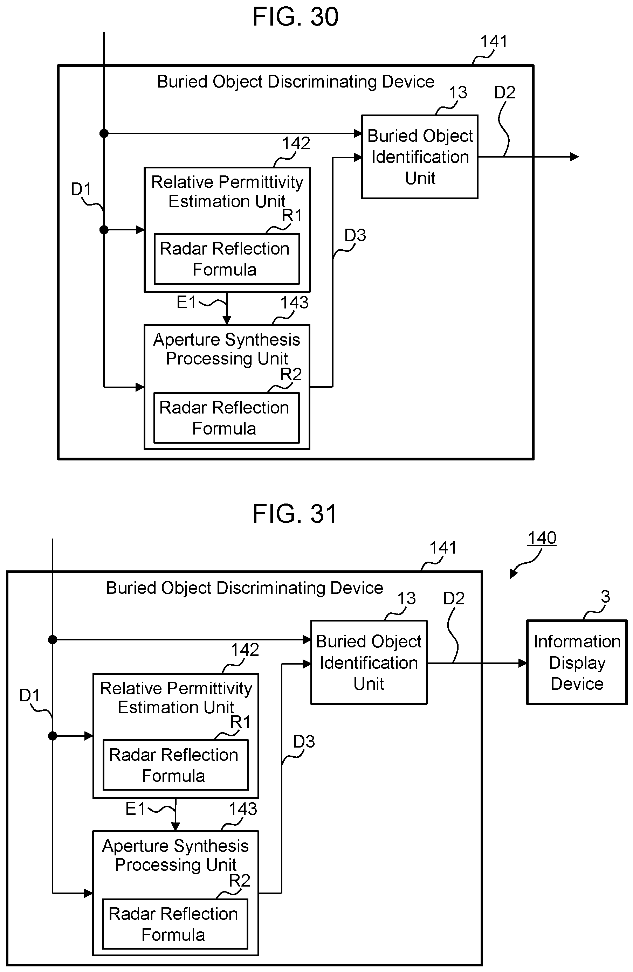

Fig. 31, in which parts corresponding to those in Figs. 1A, B regarding actions of the buried object discriminating device according to this embodiment are indicated by assigning the same reference numerals as those in Figs. 1A, B, illustrates the configuration of a buried object management system 140 according to this embodiment which is equipped with such function. This buried object management system 140 is significantly different from the buried object management system 1 according to the first embodiment in that functions of a relative permittivity estimation unit 142 and an aperture synthesis processing unit 143 for the buried object discriminating device 141 are different.

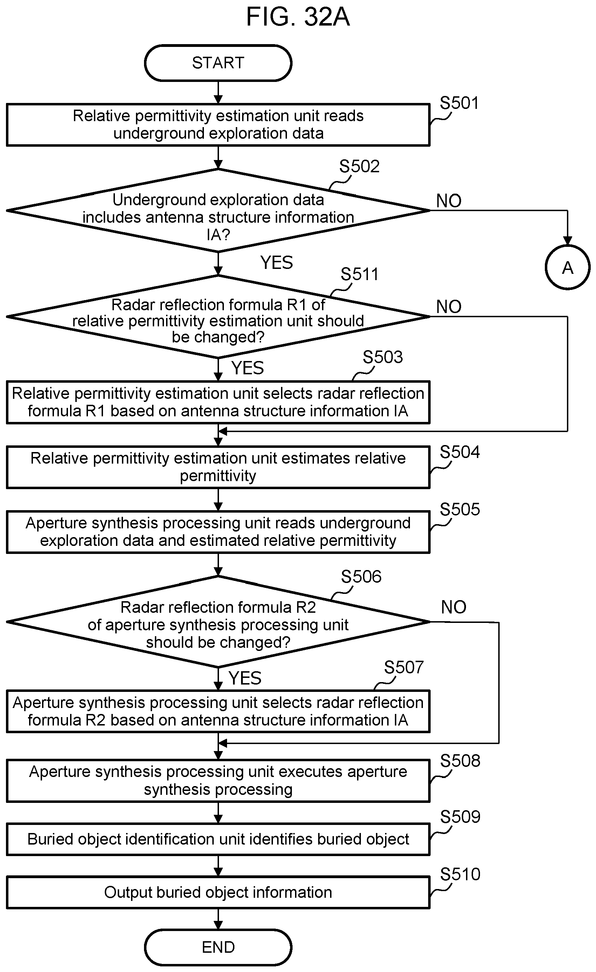

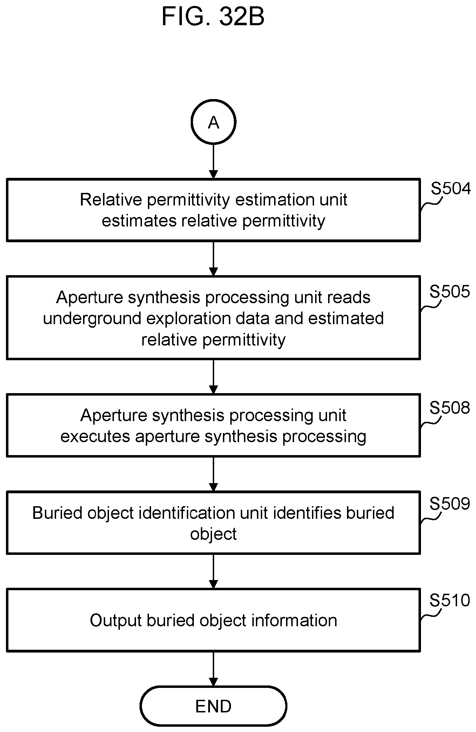

Fig. 32A and Fig. 32B illustrate flows of buried object discriminating processing executed regarding the discrimination of the buried object at the buried object discriminating device according to this embodiment.

With this buried object discriminating device 141 as illustrated in Fig. 32A and Fig. 32B, the relative permittivity estimation unit 142 firstly reads the underground exploration data D1 (S501). Then, whether the underground exploration data D1 includes antenna structure information IA or not is judged (S502). If the antenna structure information IA does not exist under this circumstance, processing similar to that of the buried object management system 1 according to the first embodiment (S504, S505, and S508 to S510 in Fig. 32B) is executed and then this buried object discriminating processing terminates.

If the underground exploration data D1 includes the antenna structure information IA, that is, if an affirmative result is obtained in step S502, a radar reflection formula R1 of the relative permittivity estimation unit 142 should be changed or not is judged (S511). If an affirmative result is obtained in this step S511, the relative permittivity estimation unit 142 selects the radar reflection formula R1 based on the antenna structure information IA (S503). If a negative result is obtained in step S511, step S503 is skipped. Then, the relative permittivity estimation unit 142 estimates the relative permittivity (S504). The estimated relative permittivity E1 obtained by the relative permittivity estimation unit 142 is input to the aperture synthesis processing unit 143 and is then read together with the underground exploration data D1 (S505). Subsequently, a radar reflection formula R2 of the aperture synthesis processing unit 143 should be changed or not is selected (S506). If an affirmative result is obtained in this step S506, the aperture synthesis processing unit 143 selects the radar reflection formula R2 based on the antenna structure information IA (S507). If a negative result is obtained in step S506, step S507 is skipped. Regarding subsequent processing, processing similar to that of the buried object management system 1 according to the first embodiment (S508 to S510) is executed and then this buried object discriminating processing terminates.

With this buried object discriminating device 141, a list of antenna structures for respective manufacturers and models of the ground radar device (hereinafter referred to as an antenna structure list), and the radar reflection formula for each antenna structure such as Formula (3) and Formula (4) are stored and managed, for example, in the aforementioned memory possessed by the buried object discriminating device 141 so that the relative permittivity estimation unit 142 and the aperture synthesis processing unit 143 can change the radar reflection formulas R1, R2.

If the buried object management system 140 according to this embodiment having the above-described configuration is employed, the accuracy in the estimation of the relative permittivity by the relative permittivity estimation unit 142 and the aperture synthesis processing by the aperture synthesis processing unit 143 can be kept constant also with the ground radar devices having different antenna structures and the relative permittivity and the aperture synthesis exploration data D3 which are estimated or generated can be kept maximally homogeneous as the buried object discriminating device 141.

Therefore, with this buried object management system 140, it is also possible to obtain, in addition to the advantageous effects obtained by the first embodiment, the advantageous effect of being capability of ensuring the output of the buried object identification unit 13 for general-purpose use.

### (12) Twelfth Embodiment

With the ground radar devices having different antenna structures as illustrated in Fig. 29(A-3) and Fig. 29(B-3), the reflection path of the electromagnetic waves varies and, therefore, a reflected image derived from the buried object which appears in the underground exploration data D1 shown in Fig. 1B sometimes has a specific shape.

So, it is considered possible to improve the buried object identification accuracy by accumulating the given underground exploration data D1 by dividing them for each antenna structure of the ground radar device used to acquire the underground exploration data D1, generating a buried object learning model for identifying the buried object based on the underground exploration data D1 for each accumulated antenna structure, and identifying the buried object by using the generated buried object learning model.

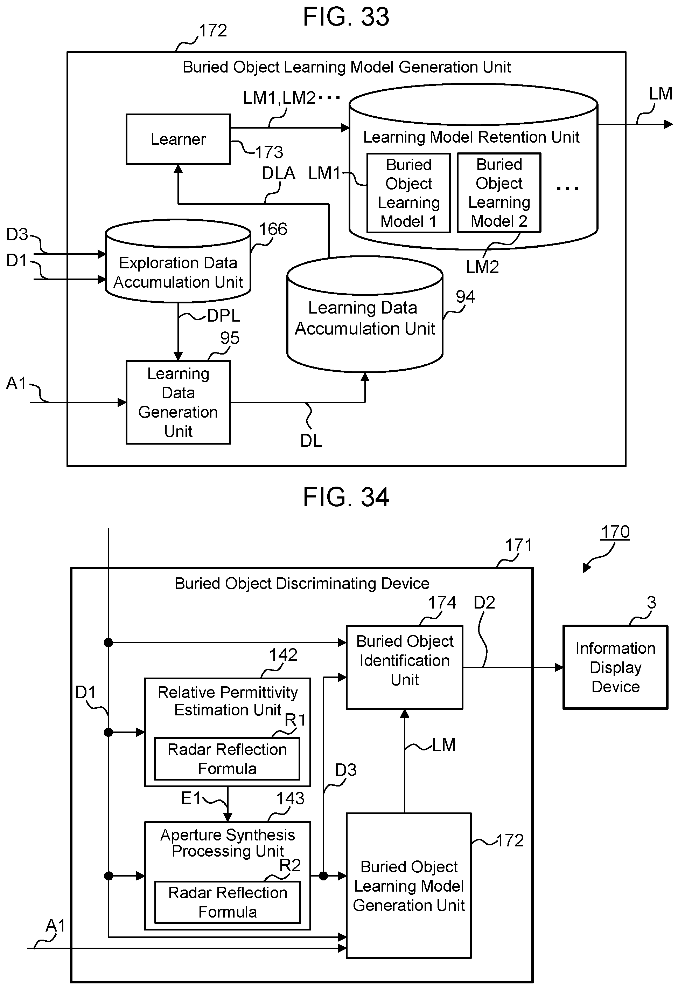

Fig. 34, in which parts corresponding to those in Fig. 31 are indicated by assigning the same reference numerals to those in Fig. 31, illustrates a buried object management system 170 according to this embodiment which is configured based on the above-described idea. This buried object management system 170 has a buried object learning model generation unit 172 illustrated in Fig. 33; and one of its features is that it generates buried object learning models buried object learning models LM (LM1, LM2, and so on) for the respective antenna structures of the ground radar devices and discriminates the buried object by using the relevant buried object learning model LM among the generated buried object learning models LM.

Practically, in the case of this embodiment, learning data DL generated by the learning data generation unit 95 for the buried object learning model generation unit 172 retains the antenna structure information IA included in the underground exploration data D1. A learner 173 extracts a learning data group DLA having the same type of the antenna structure information IA from among the accumulated learning data group DLA and causes the buried object learning model LM to learn based on that. The buried object learning model generation unit retains the buried object learning model LM (LM1, LM2, and so on) for each antenna structure information IA.

On the other hand, a buried object identification unit 174 inputs the underground exploration data D1, reads the antenna structure information IA, acquires a preferred buried object learning model LM from the buried object learning model generation unit 172, and identifies the buried object by using the acquired buried object learning model LM. Regarding the correspondence between the antenna structure information IA and the buried object learning model LM, for example, a correspondence list is retained in the memory included in this buried object discriminating device and is referenced.

Then, the buried object identification unit 174 outputs the buried object information D2 of the buried object, which is obtained by the identification processing, from the buried object discriminating device 171 and outputs it to the information display device 3. Consequently, the buried object discrimination results are displayed on the information display device 3 based on this buried object information D2.

If the buried object management system 170 according to this embodiment having the above-described configuration is employed, the preferred buried object learning model LM (LM1, LM2) is generated for each antenna structure within the system with respect to the input of the underground exploration data D1 acquired by the ground radar devices having different structures, so that the identification accuracy of the buried object identification unit 174 can be improved while ensuring the same quality of the output of the buried object identification unit 174.

### (13) Other Embodiments

Incidentally, the aforementioned first to twelfth embodiments have described the case where the buried object discriminating device is composed of one computer device; however, the present invention is not limited to this example and the buried object discriminating device may be constructed by a plurality of computer devices which constitute a distributed computing system.

Moreover, the aforementioned first to twelfth embodiments have described the case where the relative permittivity estimation unit 11, 53, 142, the aperture synthesis processing unit 12, 54, 63, 73, 143, the buried object identification unit 13, 64, 174, the depth conversion unit 42, 62, the selection unit 75, 75', the buried object learning model generation unit 97, 97', 172, the data compression unit 102, the data division unit 122, and the resizing processing unit 112 are designed as software configurations; however, the present invention is not limited to this example and some or all of them may be designed as hardware configurations.

Furthermore, the aforementioned first to twelfth embodiments have described the case where the buried object management system 1, 20, 40, 60, 70, 90, 110, 120, 140, 170 includes only the characteristic configuration specific to each of the first to twelve embodiments; however, the present invention is not limited to this example and some or all of the characteristic configurations specific to the first to twelfth embodiments may be combined together to configure the buried object management system.

### INDUSTRIAL AVAILABILITY

The present invention can be applied to a wide variety of buried object discriminating devices having various configurations for discriminating an underground buried object(s) based on the underground exploration data obtained by the transmission and reception of the electromagnetic waves to and from the underground.

### REFERENCE SIGNS LIST

1, 20, 40, 60, 70, 90, 110, 120, 140, 170: buried object management system
2, 41, 61, 71, 81, 91, 161, 101, 111, 121, 141, 171: buried object discriminating device
11, 53, 142: relative permittivity estimation unit
12, 54, 63, 73, 143: aperture synthesis processing unit
13, 64, 174: buried object identification unit
30, 44: underground exploration result screen
42, 62: depth conversion unit
56, 153: memory
102: data compression unit
112: resizing processing unit
122: data division unit
130: transmitting and receiving antenna
132: buried object
D1: underground exploration data
D1': resized underground exploration data
D3': resized aperture synthesis exploration data
D2, D21, D22: buried object information
D2': depth-included buried object information
D3: aperture synthesis exploration data
D10: compressed underground exploration data
D11: divided underground exploration data
Rx: receiving antenna
Tx: transmitting antenna
D4: synthetic data
E1: estimated relative permittivity
FM: aperture synthesis processing re-execution flag
F2: buried object identification re-execution flag
F3: depth conversion re-execution flag
V2: exploration data convergence rate
V1: exploration data match rate
D2A: buried object information group
DM: map information
22: buried object information accumulation device
23: map information storage device
24: information display device
21: buried object visualization system
75, 75': selection unit
A1: buried object existence information
94: learning data accumulation unit
95: learning data generation unit
166: exploration data accumulation unit
DPL: exploration data group
DLA: learning data group
DL: learning data
IA: antenna structure information
LM, LM1, LM2: buried object learning model(s)
76: theoretical underground exploration data generation unit
77: exploration data match rate calculation unit
78: exploration data convergence rate calculation unit
79: depth conversion re-execution flag generation unit
710: aperture synthesis processing re-execution flag generation unit
711: buried object identification re-execution flag
D1T: theoretical underground exploration data
97, 97', 172: buried object learning model generation unit
96, 173: learner
133, 134: entire edge of reflected signal of buried object
R1, R2: radar reflection formula(s)

## Claims

1. A buried object discriminating device for discriminating an underground buried object based on underground exploration data obtained by transmission and reception of electromagnetic waves to and from underground,
the buried object discriminating device comprising:
a relative permittivity estimation unit that estimates a relative permittivity of subsurface media based on the underground exploration data given from outside and outputs the estimated relative permittivity;
an aperture synthesis processing unit that executes aperture synthesis processing on the underground exploration data by using the estimated relative permittivity and outputs aperture synthesis exploration data; and
a buried object identification unit that executes identification processing for identifying the buried object based on the aperture synthesis exploration data and the underground exploration data and outputs information about the buried object as buried object information.

2. The buried object discriminating device according to claim 1,
further comprising a depth conversion unit that converts a position of the buried object information on a timeline to a depth indicating a distance from a ground surface to the buried object based on the buried object information which is output from the buried object identification unit and the estimated relative permittivity which is estimated by the relative permittivity estimation unit, and outputs depth-included buried object information which also has the converted depth.

3. The buried object discriminating device according to claim 2,
wherein the relative permittivity estimation unit re-estimates the estimated relative permittivity based on the buried object information which is output from the buried object identification unit;
wherein the aperture synthesis processing unit:
accepts an aperture synthesis processing re-execution flag from outside the buried object discriminating device; and
decides, based on the aperture synthesis processing re-execution flag, whether to re-execute the aperture synthesis processing based on the estimated relative permittivity re-estimated by the relative permittivity estimation unit;
wherein in a case of the re-execution, the buried object identification unit re-executes the identification processing for identifying the buried object based on the aperture synthesis exploration data, which is obtained by re-execution of the aperture synthesis processing by the aperture synthesis processing unit, and the underground exploration data; and
wherein the depth conversion unit:
converts the position of the buried object on the timeline to the depth of the buried object based on the buried object information, which is obtained by re-execution of the identification processing for identifying the buried object, and the estimated relative permittivity which is re-estimated by the relative permittivity estimation unit; and
outputs the depth-included buried object information which has been updated to the converted depth.

4. The buried object discriminating device according to claim 3,
wherein the buried object discriminating device further comprises a selection unit that has a function to output an aperture synthesis processing re-execution flag, a buried object identification re-execution flag, and a depth conversion re-execution flag which control re-execution of the aperture synthesis processing unit, the buried object identification unit, and the depth conversion unit based on the underground exploration data, the estimated relative permittivity, and the aperture synthesis exploration data;
and
wherein the selection unit includes:
a theoretical underground exploration data generation unit that calculates theoretical underground exploration data based on the estimated relative permittivity;
a match rate calculation unit that compares the underground exploration data with the theoretical underground exploration data and calculates a match rate between them;
a convergence rate calculation unit that calculates a convergence rate of the aperture synthesis exploration data;
a depth conversion re-execution flag generation unit that retains the estimated relative permittivity and the match rate and generates the depth conversion re-execution flag;
an aperture synthesis processing re-execution flag generation unit that retains the match rate and generates the aperture synthesis processing re-execution flag; and
a buried object identification re-execution flag generation unit that retains the convergence rate and generates the buried object identification re-execution flag.

5. The buried object discriminating device according to claim 4,
wherein the selection unit outputs at least one of the match rate and the convergence rate to outside the buried object discriminating device.

6. The buried object discriminating device according to claim 1,
wherein the buried object discriminating device has a buried object learning model generation unit;
wherein the buried object learning model generation unit includes:
a learning data generation unit that generates learning data based on buried object existence information including information indicating whether the buried object at least exists or does not exist in an exploration area regarding which the underground exploration data has been obtained, as well as the underground exploration data and the aperture synthesis exploration data; and
a learner that causes a buried object learning model to learn based on an accumulated learning data group; and
wherein the buried object identification unit identifies the buried object by using the buried object learning model.

7. The buried object discriminating device according to claim 1,
wherein the buried object discriminating device has a buried object learning model generation unit;
wherein the buried object learning model generation unit always accumulates the underground exploration data and the aperture synthesis exploration data in an exploration data accumulation unit; and
the buried object learning model generation unit includes:
a learning data generation unit that inputs buried object existence information including an existence position of the buried object which is already known, generates learning data from an exploration data group, which is acquired based on the buried object existence information and accumulated in the exploration data accumulation unit, and the buried object existence information, and accumulates the learning data in a learning data accumulation unit; and
a learner that causes a buried object learning model to learn based on the accumulated learning data group; and
wherein the buried object identification unit identifies the buried object by using the buried object learning model.

8. The buried object discriminating device according to claim 1,
further comprising a data compression unit that accepts input of the underground exploration data, compresses the underground exploration data, and outputs the compressed underground exploration data to the relative permittivity estimation unit, the aperture synthesis processing unit, and the buried object identification unit, respectively,
wherein a calculation cost of the relative permittivity estimation unit, the aperture synthesis processing unit, and the buried object identification unit can thereby be reduced.

9. The buried object discriminating device according to claim 1,
further comprising a resizing processing unit that generates resized underground exploration data and resized aperture synthesis exploration data by accepting input of the underground exploration data and resizing the underground exploration data and the aperture synthesis exploration data, which is output from the aperture synthesis processing unit, respectively to a specified size and outputs the resized underground exploration data and the resized aperture synthesis exploration data to the buried object identification unit,
wherein the same buried object identification unit can thereby be used regardless of a size of the underground exploration data.

10. The buried object discriminating device according to claim 9,
further comprising a data division unit that accepts input of the underground exploration data, generates divided underground exploration data by dividing the underground exploration data, and outputs the divided underground exploration data to the relative permittivity estimation unit, the aperture synthesis processing unit, and the buried object identification unit, respectively,
wherein a calculation cost regarding the divided underground exploration data by the relative permittivity estimation unit, the aperture synthesis processing unit, the resizing processing unit, and the buried object identification unit can thereby be reduced without reducing an amount of information possessed by the underground exploration data.

11. The buried object discriminating device according to claim 1,
wherein at least one of the relative permittivity estimation unit and the aperture synthesis processing unit:
judges whether the underground exploration data includes antenna structure information including an antenna structure of a ground radar device which has generated the underground exploration data;
if the antenna structure information is included,
selects, from radar reflection formulas defined in advance for respective antenna structures, the radar reflection formula corresponding to the antenna structure; and
estimates the relative permittivity or executes the aperture synthesis processing on the underground exploration data based on the radar reflection formula.

12. The buried object discriminating device according to claim 11,
wherein the buried object discriminating device has a buried object learning model generation unit;
wherein the buried object learning model generation unit always accumulates the underground exploration data and the aperture synthesis exploration data; and
the buried object learning model generation unit includes:
a learning data generation unit that generates learning data based on buried object existence information indicating whether the buried object at least exists or does not exist with respect to an exploration area regarding which the underground exploration data has been obtained, and an accumulated exploration data group; and
a learner that extracts a learning data group regarding the same type of antenna structure based on the antenna structures from the accumulated learning data and causes buried object learning models to learn with respect to each of the antenna structures based on the learning data group; and
wherein the buried object identification unit identifies the buried object by using the buried object learning model regarding the antenna structure of the input underground exploration data among the accumulated buried object learning models.

13. A buried object management system configured by:
the buried object discriminating device stated in claim 1; and
a buried object visualization system for visualizing the buried object information,
wherein the buried object visualization system includes:
a buried object information accumulation device for accumulating the buried object information which is output from the buried object identification unit of the buried object discriminating device;
a map information storage device for retaining map information; and
an information display device for integrating and displaying a part or whole of a buried object information group accumulated in the buried object information accumulation device and the map information stored in the map information storage device based on a position of the buried object information.

14. A buried object discriminating method executed by a buried object discriminating device for discriminating an underground buried object based on underground exploration data obtained by transmission and reception of electromagnetic waves to and from underground,
the buried object discriminating method comprising:
a first step of inputting the underground exploration data given from outside;
a second step of estimating a relative permittivity of subsurface media based on the input underground exploration data;
a third step of executing aperture synthesis processing on the underground exploration data based on the estimated relative permittivity;
a fourth step of executing identification processing for identifying the buried object based on aperture synthesis exploration data, which is obtained by executing the aperture synthesis processing on the underground exploration data, and the underground exploration data; and
a fifth step of outputting information about the buried object, which is obtained by the identification processing, as buried object information.
